# EUROPÄISCHE PATENTSCHRIFT

(11) **EP 3 317 528 B1**
(45) Veröffentlichungstag und Bekanntmachung des Hinweises auf die Patenterteilung: **04.09.2019**
(21) Anmeldenummer: 16740980.4
(22) Anmeldetag: 01.07.2016
(51) Int. Cl.: F03D 7/04

(54) **VERFAHREN ZUM STEUERN EINER ROTORBLATTVERSTELLEINRICHTUNG**
METHOD FOR CONTROLLING A ROTOR BLADE ADJUSTMENT DEVICE
PROCÉDÉ DE COMMANDE D'UN DISPOSITIF DE RÉGLAGE DE PALE DE ROTOR

(30) Priorität: 02.07.2015 DE 102015110715
(43) Veröffentlichungstag der Anmeldung: 09.05.2018
(73) Patentinhaber: Nidec SSB Wind Systems GmbH, 48499 Salzbergen (DE)
(72) Erfinder: WIBBEN, Norbert, 48499 Salzbergen (DE); BÜLTEL, Tobias, 48432 Rheine (DE); BERTOLOTTI, Fabio, 48455 Bad Bentheim (DE)
(74) Vertreter: Bossmeyer, Jörg Peter
(86) Internationale Anmeldenummer: PCT/EP2016/065622
(87) Internationale Veröffentlichungsnummer: WO 2017/001695

(56) Entgegenhaltungen:
- EP-A2- 2 159 416
- DE-A1-102009 025 819
- KR-B1- 101 350 511
- US-A1- 2011 142 594

## Beschreibung

Die Erfindung betrifft ein Verfahren zum Steuern einer Rotorblattverstelleinrichtung einer Wind- oder Wasserkraftanlage, wobei die Rotorblattverstelleinrichtung einen mit einem einer Wind- oder Wasserströmung ausgesetzten Rotorblatt verbundenen Antrieb zum Drehen des Rotorblatts um eine Rotorblattachse relativ zu einer Rotornabe, an der das Rotorblatt um die Rotorblattachse drehbar gelagert ist, und eine mit dem Rotorblatt verbundene elektromagnetische Bremse zum Blockieren einer Drehung des Rotorblatts um die Rotorblattachse aufweist, wobei die Bremse zum Ändern ihres Betätigungszustands zu einem Bremsenbetätigungszeitpunkt angesteuert wird und wobei der Antrieb zum Ändern seines Antriebszustands zu einem Antriebsbetätigungszeitpunkt angesteuert wird, der zu dem Bremsenbetätigungszeitpunkt einen vorbestimmten zeitlichen Versatz aufweist.

In Windkraft- oder Wasserkraftanlagen werden zur Regelung der Rotorblattposition von Rotorblättern Rotorblattverstelleinrichtungen mit Umrichtern eingesetzt. Die Rotorblattverstelleinrichtungen können dabei jeweils aus einem Umrichter und einer elektrischen Maschine als Antriebsmaschine, wie z.B. einer Drehstrommaschine oder einer Gleichstrommaschine, bestehen oder in anderen denkbaren elektrischen Ausprägungen ausgeführt sein. Die eingesetzten elektrischen Maschinen werden jeweils mit einer elektromagnetischen Bremse ausgestattet, die im stromlosen Zustand den Antrieb der jeweiligen Maschine mechanisch derart bremst, dass das von dieser getriebene Rotorblatt in der jeweiligen Position fixiert wird. Eine übergeordnete Steuerung ermittelt unter anderem aus aktuellen Anlagen- und Einsatzbedingungen die gewünschte Position der Rotorblätter und gibt diese über einen Kommunikationsbus als Sollwert für die Rotorblattverstelleinrichtungen der verschiedenen Achsen vor. Im Umrichter jeder Rotorblattverstelleinrichtung wird über eine Kaskadenregelung für Position, Drehzahl und Strom die Ansteuerung der jeweiligen elektrischen Maschine geregelt, sodass ein dieser zugeführter elektrischer Strom das benötigte Antriebsmoment erzeugt. Ferner wird die elektromagnetische Bremse der jeweiligen elektrischen Maschine angesteuert, wodurch deren mechanische Bremsung aufgehoben wird.

Die Ansteuerung der Bremsen und die Ansteuerung der elektrischen Maschinen durch die Umrichter wird dabei derart synchronisiert, dass einerseits Bremsen und Antriebe nicht gegeneinander arbeiten und andererseits die Rotorblätter nicht "momentenlos" sind, d.h. ohne Bremsmoment der Bremsen oder Antriebsmoment der Maschinen. Nach der Positionsvorgabe durch die übergeordnete Steuerung bis zum Aufbau des erforderlichen Antriebmoments vergeht eine gewisse Zeit, die von verschiedenen Parametern abhängt, wie z.B. von der aktuellen Zwischenkreisspannung des Umrichters, von der Temperatur der Antriebsmaschine usw. Ferner benötigt jede Bremse eine gewisse Zeit bis die mechanische Bremsung aufgehoben ist, wobei diese Zeit ebenfalls von verschiedenen Parametern abhängt, wie z.B. vom Luftspalt der Bremse, vom Verschleiß des Bremsbelages usw. Die Ansteuerung jeder Bremse mit der erforderlichen Spannung wird über den jeweiligen Umrichter initiiert, wobei ein entsprechender fest vorgegebener zeitlicher Versatz zwischen dem Start der Bestromung der Antriebsmaschine und der Initiierung der Bremsenansteuerung über eine im Umrichter agierende Regelung berücksichtigt wird. Eine Umkehrung dieses Vorganges erfolgt sinngemäß bei Erreichen der Rotorblattposition.

Aus der DE 10 2012 008 547 A1 ist ein Verfahren zum Überwachen einer elektromagnetisch betätigbaren Bremse mit einer Spulenwicklung bekannt, wobei mit einem von der Spulenwicklung erzeugten Magnetfeld eine Ankerscheibe derart anziehbar ist, dass die Bremse gelüftet wird. Dabei wird der Strom der Spulenwicklung erfasst und der zeitliche Stromverlauf derart ausgewertet, dass ein beim Lüften der Bremse durch Positionsveränderung der Ankerscheibe der Bremse bewirktes Einknicken des Stroms detektierbar ist.

Die DE 10 2013 211 989 A1 beschreibt eine Drehmomentübertragungseinrichtung für einen Antriebsstrang eines Kraftfahrzeugs, mit einer Kupplungseinheit und einer Steuereinrichtung zum Steuern der Kupplungseinheit und zum Überwachen eines Verschleißzustands der Kupplungseinheit, wobei die Kupplungseinheit zumindest eine Reibungskupplung zum steuerbaren Übertragen eines Drehmoments von einem Eingangselement auf ein Ausgangselement und einen elektromagnetischen Aktuator zum Betätigen der Reibungskupplung aufweist, wobei der elektromagnetische Aktuator eine Spule und einen Anker aufweist, der mit einem Teil der Reibungskupplung verbunden und durch Erregung der Spule versetzbar ist, und wobei die Steuereinrichtung dazu angepasst ist, eine Erregung der Spule zu ändern und den zeitlichen Verlauf einer hierdurch verursachten Änderung eines die Spule durchfließenden Stroms auszuwerten, um einen Induktivitätsmesswert zu ermitteln, der einen Verschleißzustand der Kupplungseinheit repräsentiert.

Die EP 1 650 431 B1 offenbart eine Windenergieanlage mit einer Einrichtung zur Ausrichtung mindestens einer beweglich angeordneten Komponente der Windenergieanlage zur Beeinflussung der Energieaufnahme aus dem Wind, mit mindestens einem Stellantrieb zur Einstellung einer Ausrichtung der Komponente, der über eine Steuerungseinrichtung betätigbar ist, mindestens einer Bremseinrichtung zum Halten einer eingestellten Ausrichtung der Komponente und mindestens einem, die Bremseinrichtung überwachenden mit der Steuerungseinrichtung gekoppelten Sensor, der so ausgebildet ist, dass er eine Fehlfunktion der Bremseinrichtung detektiert und eine detektierte Fehlfunktion der Bremseinrichtung an die Steuerungseinrichtung meldet, wobei die Steuerungseinrichtung zur Prüfung anhand vorgegebener Parameter, ob bei einer gemeldeten Fehlfunktion die Windenergieanlage notwendig abgeschaltet werden muss und zur Abschaltung der Windenergieanlage ausgebildet ist.

Die EP 2 058 513 A2 beschreibt ein Verfahren zum Betreiben einer Windenergieanlage, wobei die Windenergieanlage einen Rotor mit einer Rotorachse und wenigstens ein am Rotor angeordnetes Rotorblatt aufweist, wobei das Rotorblatt um eine Rotorblattachse mit einem vorbestimmten Rotorblattverstellwinkel einstellbar ist oder eingestellt wird, und wobei das wenigstens eine Rotorblatt in eine Ruheposition gedreht wird, nach Erreichen einer ersten vorbestimmten Drehposition des Rotorblatts die Drehung des Rotorblatts gebremst wird und die in Folge des Bremsvorgangs erreichte Stillstandsposition des Rotorblatts erfasst wird.

Die DE 10 2006 049 490 A1 offenbart eine Ansteuerschaltung zum Betrieb eines Gleichstrommotors mit elektrisch betätigter Haltebremse, insbesondere für die Verstellung eines Rotorblatts einer Wind- oder Wasserkraftanlage, die eine Notbetriebversorgungseinrichtung und einen Dreibrücken-Wechselrichter umfasst, wobei die Notbetriebversorgungseinrichtung über ein Notbetrieb-Netz-Schaltelement mit dem Zwischenkreis des Dreibrücken-Wechselrichters freischaltbar verbunden ist, wobei der Gleichstrommotor über ein Notbetrieb-Motor-Umschaltelement entweder mit dem Dreibrücken-Wechselrichter oder mit der Notbetriebversorgungseinrichtung verbunden ist, und wobei die Haltebremse über ein Notbetrieb-Bremse-Umschaltelement entweder mit dem Dreibrücken-Wechselrichter oder mit der Notbetriebversorgungseinrichtung verbunden ist.

Die US 2011/142594 A1 umfasst ein Verfahren zum Steuern einer Rotorblattverstelleinrichtung einer Windkraftanlage.

Die Synchronisierung der Antriebsbestromung und der Bremsenansteuerung erfolgt mittels voreingestellter Versatzzeiten, die für definierte Parameter gültig sind. Diese Parameter können sich aber im Betrieb ändern, wie z.B. die Temperatur, der Verschleiß des Bremsbelags, die Vergrößerung des Luftspalts zwischen Bremsbelag und Ankerscheibe usw. Während des zeitlichen Versatzes wird der Antrieb mittels Regelung auf Drehzahl Null gehalten. Bezogen auf die aktuellen Erfordernisse resultiert hieraus, dass bei zu kurz eingestellten Versatzzeiten die Antriebe für mehr oder weniger kurze Zeiten gegen die geschlossenen Bremsen arbeiten, und dass bei zu lang eingestellten Versatzzeiten die tatsächlichen Positioniervorgänge unnötig verzögert werden. Wird bei der Versatzzeit ein für alle Betriebsbedingungen ausreichender Sicherheitsaufschlag gewählt, verschlechtert sich die Reaktionszeit der Rotorblattpositionierung. Ist hingegen die Versatzzeit zu kurz, bedeutet dies eine unnötige Beanspruchung der Mechanik, eine unnötige Erwärmung des Antriebs, des Umrichters und/oder der gesamten Rotorblattverstelleinrichtung sowie einen unnötigen Strombedarf mit dadurch reduzierten Spitzenstromzeiten.

Eine schlechtere Reaktionszeit der Rotorblattpositionierung gegenüber einer optimalen bedeutet eine mindere Energieausbeute der Wind- oder Wasserkraftanlage, da die Rotorblätter nicht ausreichend schnell auf sich ändernde Wind- bzw. Wasserverhältnisse ausgerichtet werden können. Ferner führt eine reduzierte Spitzenstromzeit zu reduzierten Zeiten mit Spitzen-Antriebsmomenten, die in Notsituationen zur Verfügung stehen müssen, wodurch eine gewisse Überdimensionierung von Antrieb und Umrichter notwendig ist, um dem entgegenzuwirken.

Ein Nebeneffekt der thermischen Belastung besteht darin, dass alle Bauelemente der Rotorblattverstelleinrichtung einem höheren thermischen Stress unterliegen. Ein weiter Nebeneffekt ist, dass bei Ausfall der Netzversorgung die Backup-Systeme durch die Energieentnahme während der genannten Überlappung der Momente stärker belastet werden, da der eigentlich nicht benötigte aber entnommene Energiegehalt wieder zugeführt werden muss.

Die bisherige Ansteuerung der Bremse gibt keine Information darüber, ob die Bremsscheibe tatsächlich freigegeben wurde oder nicht, da lediglich bekannt ist, ob die Bremse mit Energie versorgt wird oder nicht. Falls die Bremse z.B. wegen einer verkanteten oder durch Oxidation "verklebten" Ankerscheibe nicht öffnen kann, reicht das abgegebene Antriebsmoment möglicherweise nicht aus, um das Rotorblatt in einer Notfallsituation in ausreichend kurzer Zeit in die sichere Position zu verfahren, um einen Ausfall der gesamten Wind- oder Wasserkraftanlage zu verhindern.

Gewünscht wird somit eine Lösung zur Optimierung der Synchronisierung von Ansteuerung der elektromagnetischen Bremse und Bestromung der Antriebsmaschine. Insbesondere besteht der Wunsch, die Reaktionszeit der Rotorblattpositionierung zu reduzieren. Ferner besteht der Wunsch, eine energieeffiziente Nutzung der Antriebsmaschine und somit eine reduzierte thermische Belastung der Antriebsmaschine, des Umrichters und somit der gesamten Rotorblattverstelleinrichtung zu erreichen. Weiterhin besteht der Wunsch, dass Backup-Systeme nur mit der tatsächlich benötigten Energie ent- und geladen werden. Ebenfalls besteht der Wunsch, eine Aussage über den tatsächlichen Schaltzustand der Bremse bezogen auf die Bremsscheibe gewinnen zu können, um z.B. ausgefallene Bremsen und/oder einen Verschleiß der Bremsscheibe erkennen zu können, ohne einen externen Sensor in oder an der Bremse nutzen zu müssen.

Ausgehend hiervon liegt der Erfindung die Aufgabe zu Grunde, bei einem Verfahren der eingangs genannten Art den Antriebsbetätigungszeitpunkt und den Bremsenbetätigungszeitpunkt besser aufeinander abstimmen zu können.

Diese Aufgabe wird erfindungsgemäß mit einem Verfahren nach Anspruch 1 gelöst. Bevorzugte Weiterbildungen der Erfindung sind in den Unteransprüchen und in der nachfolgenden Beschreibung gegeben.

Das eingangs genannte Verfahren zum Steuern einer Rotorblattverstelleinrichtung einer Wind- oder Wasserkraftanlage, wobei die Rotorblattverstelleinrichtung einen mit einem einer Wind- oder Wasserströmung ausgesetzten Rotorblatt verbundenen Antrieb zum Drehen des Rotorblatts um eine Rotorblattachse relativ zu einer Rotornabe, an der das Rotorblatt um die Rotorblattachse drehbar gelagert ist, und eine mit dem Rotorblatt verbundene elektromagnetische Bremse zum Blockieren einer Drehung des Rotorblatts um die Rotorblattachse aufweist, wobei die Bremse zum Ändern ihres Betätigungszustands zu einem Bremsenbetätigungszeitpunkt angesteuert wird und wobei der Antrieb zum Ändern seines Antriebszustands zu einem Antriebsbetätigungszeitpunkt angesteuert wird, der zu dem Bremsenbetätigungszeitpunkt einen vorbestimmten zeitlichen Versatz aufweist, wird erfindungsgemäß dadurch weitergebildet, dass ein durch die Bremse fließender und/oder dieser zugeführter elektrischer Strom gemessen wird, die Form der sich daraus ergebenden Strom-Zeit-Kurve ausgewertet wird und der zeitliche Versatz in Abhängigkeit vom Ergebnis dieser Auswertung neu bestimmt und/oder adaptiert wird.

Durch die Auswertung der Form der Strom-Zeit-Kurve ist das aktuelle Verhalten der Bremse erkennbar. Sollte sich dies, z.B. aufgrund von Verschleiß, geändert haben, so wird der zeitliche Versatz durch seine Neubestimmung und/oder Adaption an das aktuelle Verhalten der Bremse angepasst. Somit können der Antriebsbetätigungszeitpunkt und der Bremsenbetätigungszeitpunkt gut aufeinander abgestimmt werden. Bevorzugt wird der zeitliche Versatz nach der Auswertung der Form der Strom-Zeit-Kurve geändert, insbesondere wenn der neu bestimmte und/oder adaptierte zeitliche Versatz von dem vorherigen, aktuellen oder bislang gültigen zeitlichen Versatz abweicht.

Im stromlosen Zustand der Bremse blockiert die Bremse bevorzugt eine Drehung des Rotorblatts um die Rotorblattachse. Die Bremse kann vorteilhaft durch Bestromen gelöst werden und/oder die Bremse ist vorteilhaft durch Bestromen lösbar. Unter Bestromen der Bremse ist insbesondere die Zufuhr des oder eines elektrischen Stroms zu der Bremse zu verstehen.

Insbesondere wird die Bremse durch eine Steuervorrichtung gesteuert und/oder angesteuert. Bevorzugt wird die Bremse zum Ändern ihres Betätigungszustands zum Bremsenbetätigungszeitpunkt durch die Steuervorrichtung angesteuert. Vorzugsweise weist die Rotorblattverstelleinrichtung die Steuervorrichtung auf.

Der Antrieb wird insbesondere durch eine Antriebssteuereinrichtung gesteuert und/oder angesteuert. Bevorzugt wird der Antrieb zum Ändern seines Antriebszustands zum Antriebsbetätigungszeitpunkt durch die Antriebssteuereinrichtung angesteuert. Vorzugsweise weist die Rotorblattverstelleinrichtung die Antriebssteuereinrichtung auf. Die Antriebssteuereinrichtung kommuniziert bevorzugt mit der Steuervorrichtung und/oder die Antriebssteuereinrichtung steht bevorzugt mit der Steuervorrichtung in Kommunikationsverbindung. Beispielsweise ist die Steuervorrichtung durch die Antriebssteuereinrichtung gebildet oder die Antriebssteuereinrichtung ist z.B. durch die Steuervorrichtung gebildet.

Die Strom-Zeit-Kurve ist vorzugsweise eine gemessene Kurve. Insbesondere wird die Strom-Zeit-Kurve gespeichert. Bevorzugt liegt die Strom-Zeit-Kurve in Form von Messwerten vor, die vorzugsweise gespeichert sind oder werden. Beispielsweise ist oder wird die Strom-Zeit-Kurve und/oder sind oder werden die Messwerte in der Steuervorrichtung und/oder der Antriebssteuereinrichtung gespeichert. Die Auswertung der Form der Strom-Zeit-Kurve erfolgt insbesondere mittels der Steuervorrichtung und/oder der Antriebssteuereinrichtung. Beispielsweise erfolgt die Auswertung der Strom-Zeit-Kurve oder der Form der Form der Strom-Zeit-Kurve in Echtzeit.

Der durch die Bremse fließende und/oder dieser zugeführte elektrische Strom wird insbesondere kontinuierlich und/oder über oder zumindest über ein Zeitintervall gemessen. Insbesondere wird der durch die Bremse fließende und/oder dieser zugeführte elektrische Strom bei einem Wechsel des Betätigungszustands der Bremse gemessen. Vorzugsweise beginnt das Zeitintervall zum Bremsenbetätigungszeitpunkt und/oder der Bremsenbetätigungszeitpunkt liegt am Beginn und/oder innerhalb des Zeitintervalls. Bevorzugt endet das Zeitintervall zum Zeitpunkt des Wechsels des Betätigungszustands der Bremse und/oder der Zeitpunkt des Wechsels des Betätigungszustands der Bremse liegt am Ende und/oder innerhalb des Zeitintervalls. Der Zeitpunkt des Wechsels des Betätigungszustands der Bremse liegt insbesondere nach dem Bremsenbetätigungszeitpunkt. Das Zeitintervall und/oder die Dauer des Zeitintervalls ist vorzugsweise vorgegeben. Alternativ endet das Zeitintervall dann, wenn der gemessene Strom einen vorgegebenen Schwellenwert erreicht, überschreitet oder unterschreitet. Ferner ist eine kontinuierliche oder permanente Auswertung der Strom-Zeit-Kurve oder der Form der Strom-Zeit-Kurve möglich, insbesondere mit einem modulierten Wechselstrom-Signal.

Häufig ist der Antrieb schneller ansprechbar als die Bremse. Bevorzugt liegt der Antriebsbetätigungszeitpunkt, insbesondere um den zeitlichen Versatz, nach dem Bremsenbetätigungszeitpunkt. Alternativ kann der Antriebsbetätigungszeitpunkt aber auch, insbesondere um den zeitlichen Versatz, vor dem Bremsenbetätigungszeitpunkt liegen. Ist der zeitliche Versatz eine vorzeichenbehaftete Größe, so kann die vorgenannte Alternative aber auch durch einen negativen zeitlichen Versatz berücksichtigt werden oder umgekehrt. Ferner kann in einem Grenzfall der zeitliche Versatz Null sein, sodass der Antriebsbetätigungszeitpunkt mit dem Bremsenbetätigungszeitpunkt zusammenfällt. Vorzugsweise ist der zeitliche Versatz größer oder gleich Null.

Der Antrieb ist insbesondere ein elektrischer Antrieb. Bevorzugt sind dem Antrieb zwei oder wenigstens zwei Antriebszustände zugeordnet. In einem ersten Antriebszustand ist der Antrieb insbesondere stromlos und/oder der Antrieb erzeugt insbesondere kein Drehmoment zum Drehen des Rotorblatts um die Rotorblattachse oder zum Halten des Rotorblatts in seiner Position bezüglich der Rotorblattachse und/oder der Antrieb ruht. In einem zweiten Antriebszustand ist der Antrieb insbesondere bestromt und/oder der Antrieb erzeugt insbesondere ein Drehmoment zum Drehen des Rotorblatts um die Rotorblattachse oder zum Halten des Rotorblatts in seiner Position bezüglich der Rotorblattachse und/oder der Antrieb dreht das Rotorblatt um die Rotorblattachse oder hält das Rotorblatt in seiner Position bezüglich der Rotorblattachse. Eine Änderung des Antriebszustands des Antriebs ist insbesondere ein Wechsel zwischen dem ersten Antriebszustand und dem zweiten Antriebszustand und/oder von einem der Antriebszustände zu einem anderen der Antriebszustände. Insbesondere ist eine Änderung des Antriebszustands des Antriebs ein Wechsel vom ersten Antriebszustand zum zweiten Antriebszustand oder vom zweiten Antriebszustand zum ersten Antriebszustand. Bevorzugt wird bei einem Wechsel vom ersten Antriebszustand zum zweiten Antriebszustand das Erzeugen des oder eines Drehmoments zum Drehen des Rotorblatts um die Rotorblattachse oder zum Halten des Rotorblatts in seiner Position bezüglich der Rotorblattachse und/oder das oder ein Drehen des Rotorblatts um die Rotorblattachse oder das oder ein Halten des Rotorblatts in seiner Position bezüglich der Rotorblattachse mittels des Antriebs initiiert. Bei einem Wechsel vom zweiten Antriebszustand zum ersten Antriebszustand wird bevorzugt das Erzeugen des oder eines Drehmoments zum Drehen des Rotorblatts um die Rotorblattachse oder zum Halten des Rotorblatts in seiner Position bezüglich der Rotorblattachse und/oder das oder ein Drehen des Rotorblatts um die Rotorblattachse oder das oder ein Halten des Rotorblatts in seiner Position bezüglich der Rotorblattachse mittels des Antriebs beendet.

Bevorzugt sind der Bremse zwei oder wenigstens zwei Betätigungszustände zugeordnet. In einem ersten Betätigungszustand ist die Bremse insbesondere stromlos oder bestromt und/oder im Eingriff und/oder die Bremse blockiert insbesondere das Rotorblatt und/oder die Bremse blockiert insbesondere die oder eine Drehung des Rotorblatts um die Rotorblattachse. In einem zweiten Betätigungszustand ist die Bremse insbesondere bestromt oder stromlos und/oder gelöst und/oder das Rotorblatt freigegeben und/oder die oder eine Drehung des Rotorblatts um die Rotorblattachse insbesondere freigeben und/oder möglich. Ist die Bremse im ersten Betätigungszustand stromlos, so ist sie im zweiten Betätigungszustand vorzugsweise bestromt. Ist die Bremse im ersten Betätigungszustand bestromt, so ist sie im zweiten Betätigungszustand vorzugsweise stromlos. Eine Änderung des Betätigungszustands der Bremse ist insbesondere ein Wechsel zwischen dem ersten Betätigungszustand und dem zweiten Betätigungszustand und/oder von einem der Betätigungszustände zu einem anderen der Betätigungszustände. Insbesondere ist eine Änderung des Betätigungszustands der Bremse ein Wechsel vom ersten Betätigungszustand zum zweiten Betätigungszustand oder vom zweiten Betätigungszustand zum ersten Betätigungszustand. Bevorzugt wird bei einem Wechsel vom ersten Betätigungszustand zum zweiten Betätigungszustand die Bremse gelöst und/oder außer Eingriff gebracht und/oder das Rotorblatt freigegeben und/oder die oder eine Drehung des Rotorblatts um die Rotorblattachse freigegeben und/oder ermöglicht. Bei einem Wechsel vom zweiten Betätigungszustand zum ersten Betätigungszustand wird die Bremse insbesondere in Eingriff gebracht und/oder das Rotorblatt insbesondere durch die Bremse abgebremst und/oder blockiert und/oder die oder eine Drehung des Rotorblatts um die Rotorblattachse durch die Bremse insbesondere abgebremst und/oder blockiert.

Gemäß einer ersten bevorzugten Variante wird der Antrieb zum Antriebsbetätigungszeitpunkt zum Drehen des Rotorblatts um die Rotorblattachse oder zum Halten des Rotorblatts in seiner Position bezüglich der Rotorblattachse und/oder zum Erzeugen des oder eines Drehmoments zum Drehen des Rotorblatts um die Rotorblattachse oder zum Halten des Rotorblatts in seiner Position bezüglich der Rotorblattachse und/oder zu einem Wechsel vom ersten Antriebszustand zum zweiten Antriebszustand und/oder zum Annehmen des zweiten Antriebszustands angesteuert. Dazu wird der Antrieb insbesondere eingeschaltet und/oder mit elektrischem Strom versorgt (bestromt). Ferner wird die Bremse zum Bremsenbetätigungszeitpunkt bevorzugt zum Lösen der Bremse und/oder zum Freigeben des Rotorblatts und/oder zum Freigeben der oder einer Drehung des Rotorblatts um die Rotorblattachse und/oder zu einem Wechsel vom ersten Betätigungszustand zum zweiten Betätigungszustand und/oder zum Annehmen des zweiten Betätigungszustands angesteuert. Dazu wird die Bremse insbesondere eingeschaltet und/oder mit Strom versorgt (bestromt) oder ausgeschaltet und/oder stromlos geschaltet. Zum Bremsenbetätigungszeitpunkt blockiert die Bremse vorteilhaft das Rotorblatt und/oder die oder eine Drehung des Rotorblatts um die Rotorblattachse. Insbesondere befindet sich die Bremse zum Bremsenbetätigungszeitpunkt im ersten Betätigungszustand. Zum Antriebsbetätigungszeitpunkt ruht vorzugsweise der Antrieb und/oder der Antrieb erzeugt vorzugsweise kein Drehmoment zum Drehen des Rotorblatts um die Rotorblattachse oder zum Halten des Rotorblatts in seiner Position bezüglich der Rotorblattachse. Insbesondere befindet sich der Antrieb zum Antriebsbetätigungszeitpunkt im ersten Antriebszustand.

Gemäß einer zweiten bevorzugten Variante wird der Antrieb zum Antriebsbetätigungszeitpunkt zum Ruhen und/oder zum Beenden der oder einer, insbesondere angetriebenen, Drehung des Rotorblatts um die Rotorblattachse oder des oder eines, insbesondere aktiven, Haltens des Rotorblatts in seiner Position bezüglich der Rotorblattachse und/oder zum Beenden des oder eines Erzeugens des oder eines Drehmoments zum Drehen des Rotorblatts um die Rotorblattachse oder zum Halten des Rotorblatts in seiner Position bezüglich der Rotorblattachse und/oder zu einem Wechsel vom zweiten Antriebszustand zum ersten Antriebszustand und/oder zum Annehmen des ersten Antriebszustands angesteuert. Dazu wird der Antrieb insbesondere ausgeschaltet und/oder stromlos geschaltet. Ferner wird die Bremse zum Bremsenbetätigungszeitpunkt bevorzugt zum Blockieren des Rotorblatts und/oder zum Blockieren der oder einer Drehung des Rotorblatts um die Rotorblattachse und/oder zu einem Wechsel vom zweiten Betätigungszustand zum ersten Betätigungszustand und/oder zum Annehmen des ersten Betätigungszustands angesteuert. Dazu wird die Bremse insbesondere ausgeschaltet und/oder stromlos geschaltet oder eingeschaltet und/oder mit Strom versorgt (bestromt). Zum Bremsenbetätigungszeitpunkt ist die Bremse vorteilhaft gelöst und/oder das Rotorblatt vorzugsweise freigegeben und/oder die oder eine Drehung des Rotorblatts um die Rotorblattachse vorzugsweise freigegeben und/oder möglich. Insbesondere befindet sich die Bremse zum Bremsenbetätigungszeitpunkt im zweiten Betätigungszustand. Zum Antriebsbetätigungszeitpunkt dreht der Antrieb vorteilhaft das Rotorblatt um die Rotorblattachse oder hält das Rotorblatt in seiner Position bezüglich der Rotorblattachse und/oder der Antrieb erzeugt vorteilhaft das oder ein Drehmoment zum Drehen des Rotorblatts um die Rotorblattachse oder zum Halten des Rotorblatts in seiner Position bezüglich der Rotorblattachse. Insbesondere befindet sich der Antrieb zum Antriebsbetätigungszeitpunkt im zweiten Antriebszustand.

Die erste und die zweite Variante sind vorzugsweise Alternativen. Es ist z.B. aber auch möglich, die erste Variante und die zweite Variante nacheinander durchzuführen. Vorteilhaft wird die zweite Variante nach der ersten Variante durchgeführt. Ergänzend oder alternativ wird die erste Variante z.B. nach der zweiten Variante durchgeführt.

Der durch die Bremse fließende elektrische Strom ist beispielsweise ein Gleichstrom. Gemäß einer Weiterbildung weist der durch die Bremse fließende elektrische Strom einen Betätigungsstromanteil und einen diesem überlagerten Wechselstromanteil auf, wobei das Auswerten der Form der Strom-Zeit-Kurve insbesondere durch Auswerten des Betätigungsstromanteils oder durch Auswerten des überlagerten Wechselstromanteils oder durch Auswerten des Betätigungsstromanteils und des überlagerten Wechselstromanteil erfolgt. Der Betätigungsstromanteil ist bevorzugt ein Gleichstrom oder Gleichstromanteil. Aus dem Wechselstromanteil wird insbesondere die oder eine Induktivität der Bremse oder des oder eines oder wenigstens eines Elektromagneten der Bremse bestimmt.

Bevorzugt ist eine elektrische Spannungsquelle vorgesehen, mittels welcher eine elektrische Spannung an die Bremse angelegt wird oder werden kann. Die elektrische Spannungsquelle liefert insbesondere den durch die Bremse fließenden elektrischen Strom oder kann diesen liefern. Bevorzugt ruft die elektrische Spannung und/oder eine Änderung der elektrischen Spannung den durch die Bremse fließenden elektrischen Strom hervor.

Die von der elektrischen Spannungsquelle zur Verfügung gestellte elektrische Spannung ist insbesondere eine Gleichspannung. Beispielsweise ist die von der elektrischen Spannungsquelle zur Verfügung gestellte elektrische Spannung eine konstante Gleichspannung. Alternativ ist die von der elektrischen Spannungsquelle zur Verfügung gestellte elektrische Spannung eine gepulste oder pulsweitenmodulierte Gleichspannung. In diesem Fall ist der zeitliche Abstand zwischen zwei aufeinander folgenden Pulsen der elektrischen Spannung insbesondere kleiner als die mechanische Reaktionszeit der Bremse und/oder von einem oder mehreren beweglichen Teilen der Bremse, wie z.B. einer Ankerscheibe. Gemäß einer Weiterbildung weist die von der elektrischen Spannungsquelle zur Verfügung gestellte elektrische Spannung einen Betätigungsspannungsanteil und einen diesem überlagerten Wechselspannungsanteil auf. Der Betätigungsspanungsanteil ist bevorzugt eine konstante Gleichspannung oder ein konstanter Gleichspannungsanteil. Bevorzugt ist der Betätigungsspannungsanteil ungleich Null. Der Wechselspannungsanteil ruft insbesondere den Wechselstromanteil hervor. Der Betätigungsspannungsanteil und/oder eine Änderung des Betätigungsspannungsanteils ruft insbesondere den Betätigungsstromanteil hervor.

Gemäß einer Ausgestaltung wird die Bremse zum Bremsenbetätigungszeitpunkt, vorzugsweise mittels der Steuervorrichtung, an die oder eine elektrische Spannungsquelle angeschlossen und/oder die elektrische Spannung oder der Betätigungsspannungsanteil wird, vorzugsweise mittels der Steuervorrichtung, auf einen Wert ungleich Null, insbesondere größer Null, gesetzt. Dies erfolgt insbesondere bei der ersten Variante oder alternativ bei der zweiten Variante. Die Spannungsquelle liefert dabei vorzugsweise den durch die Bremse fließenden elektrischen Strom. Alternativ wird die Bremse, vorzugsweise mittels der Steuervorrichtung, zum Bremsenbetätigungszeitpunkt von der oder einer elektrischen Spannungsquelle getrennt und/oder die elektrische Spannung oder der Betätigungsspannungsanteil wird, vorzugsweise mittels der Steuervorrichtung, auf einen geringeren Wert oder auf einen Wert von Null gesetzt, was insbesondere bei der zweiten Variante oder alternativ bei der ersten Variante erfolgt.

Im zweiten oder alternativ im ersten Betätigungszustand der Bremse ist oder wird die Spannungsquelle, vorzugsweise mittels der Steuervorrichtung, insbesondere an die Bremse angeschlossen und/oder die oder eine elektrische Spannung ist oder wird, vorzugsweise mittels der Steuervorrichtung, insbesondere an die Bremse angelegt. Im ersten oder alternativ im zweiten Betätigungszustand der Bremse ist oder wird die Spannungsquelle, vorzugsweise mittels der Steuervorrichtung, insbesondere von der Bremse getrennt und/oder die oder eine an die Bremse angelegte elektrische Spannung ist oder wird, vorzugsweise mittels der Steuervorrichtung, insbesondere geringer als im ersten Betätigungszeitpunkt eingestellt und/oder auf einen Wert von Null gesetzt.

Die elektromagnetische Bremse ist bevorzugt eine Federspeicherbremse. Gemäß einer Ausgestaltung weist die Bremse einen Träger, eine oder wenigstens eine Bremsscheibe, eine oder wenigstens eine an dem Träger relativ zu der Bremsscheibe verschiebbar gelagerte Ankerscheibe, eine oder wenigstens eine oder mehrere an dem Träger gelagerte und die Ankerscheibe in Richtung auf die Bremsscheibe oder auf eine Anlage drückende Federn, welche die Ankerscheibe im stromlosen Zustand der Bremse insbesondere gegen die Bremsscheibe oder die Anlage drücken, und einen oder wenigstens einen Elektromagneten auf, durch welchen insbesondere der elektrische Strom fließt oder fließen kann, wobei der Elektromagnet im bestromten Zustand die Ankerscheibe durch Magnetkraft gegen die Kraft der Feder oder Federn von der Bremsscheibe oder Anlage abrückt oder im Abstand zu der Bremsscheibe oder der Anlage hält. Die Anlage ist z.B. im Abstand zu der Bremsscheibe vorgesehen. Beispielsweise ist die Anlage am Träger vorgesehen. Bevorzugt ist die Anlage aber durch die Bremsscheibe gebildet.

Bevorzugt trägt die Bremsscheibe einen oder wenigstens einen Bremsbelag oder mehrere Bremsbeläge. Vorteilhaft ist die Bremsscheibe, insbesondere drehbar, an dem Träger gelagert. Vorzugsweise ist die Bremsscheibe drehstarr mit der Rotornabe oder mit dem Rotorblatt verbunden. Ferner ist der Träger bevorzugt drehstarr mit dem Rotorblatt oder mit der Rotornabe verbunden. Vorteilhaft ist die Ankerscheibe drehbar an dem Träger gelagert oder drehstarr mit diesem verbunden. Vorzugsweise besteht die Ankerscheibe aus Magnetwerkstoff und/oder aus einem magnetisierbaren Werkstoff und/oder die Ankerscheibe umfasst einen oder mehrere Bereiche aus Magnetwerkstoff und/oder aus einem magnetisierbaren Werkstoff. Unter bestromtem Zustand des Elektromagneten ist insbesondere die Zufuhr des oder eines elektrischen Stroms zu dem Elektromagneten zu verstehen. Der Elektromagnet umfasst bevorzugt eine oder wenigstens eine elektrische Spule. Bevorzugt ist die Spule am Träger befestigt und/oder starr mit dem Träger verbunden. Der Träger wird insbesondere auch als Spulenträger bezeichnet. Der Elektromagnet ist bevorzugt fest, insbesondere starr, mit dem Träger verbunden und/oder der Träger bildet zusammen mit der Spule den Elektromagnet. Beispielsweise bildet der Träger einen Spulenkern der Spule. Vorzugsweise besteht der Träger, insbesondere vollständig oder zumindest teilweise, aus Magnetwerkstoff und/oder aus einem magnetisierbaren Werkstoff. Im bestromten Zustand des Elektromagneten liegt die Ankerscheibe bevorzugt an der Spule und/oder am Träger und/oder an einem Anschlag an oder die Ankerscheibe wird an die Spule und/oder an den Träger und/oder an den Anschlag angelegt. Der Anschlag ist z.B. durch den Träger oder durch die Spule gebildet und/oder mit diesem oder dieser, vorzugsweise starr, verbunden. Beispielsweise ist der Anschlag an dem Träger oder an der Spule vorgesehen. Die Bremsscheibe ist insbesondere im Abstand zu der Spule und/oder zu dem Träger und/oder zu dem Anschlag angeordnet. Im bestromten Zustand des Elektromagneten wird die Ankerscheibe bevorzugt durch Magnetkraft gegen die Kraft der Feder oder Federn von der Bremsscheibe abgerückt, bis die Ankerscheibe an der Spule und/oder an dem Träger und/oder an dem Anschlag anliegt, oder im Abstand zu der Bremsscheibe, insbesondere an der Spule und/oder an dem Träger und/oder an dem Anschlag anliegend, gehalten.

Im ersten Betätigungszustand der Bremse, der insbesondere dem stromlosen Zustand der Bremse entspricht, liegt die Ankerscheibe bevorzugt an der Bremsscheibe an und/oder die Ankerscheibe wird bevorzugt mittels der Feder oder Federn gegen die Bremsscheibe gedrückt. Im zweiten Betätigungszustand der Bremse, der insbesondere dem bestromten Zustand der Bremse entspricht, ist die Ankerscheibe bevorzugt von der Bremsscheibe abgerückt und/oder die Ankerscheibe wird bevorzugt im Abstand von der Bremsscheibe gehalten und/oder die Ankerscheibe liegt bevorzugt an der Spule und/oder an dem Träger und/oder an dem Anschlag an.

Der Antrieb weist bevorzugt ein Antriebsgehäuse und eine relativ zu diesem drehbare Antriebswelle auf. Insbesondere ist das Antriebsgehäuse drehstarr mit der Rotornabe oder mit dem Rotorblatt verbunden. Ferner ist die Antriebswelle bevorzugt drehstarr mit dem Rotorblatt oder mit der Rotornabe verbunden. Beispielsweise ist die Bremsscheibe drehstarr mit der Antriebswelle oder mit dem Antriebsgehäuse verbunden. Ferner ist der Träger beispielsweise drehstarr mit dem Antriebsgehäuse oder mit der Antriebswelle verbunden. Vorteilhaft ist die Ankerscheibe drehstarr mit dem Antriebsgehäuse oder mit der Antriebswelle verbunden. Im stromlosen Zustand der Bremse ist oder wird die Bremsscheibe mittels der Feder oder Federn und/oder der Ankerscheibe beispielsweise gegen die Rotornabe, gegen das Rotorblatt, gegen das Antriebsgehäuse, gegen die Antriebswelle oder gegen den Träger gedrückt. Beispielsweise ist oder wird die Bremsscheibe im stromlosen Zustand der Bremse zwischen der Ankerscheibe und der Rotornabe, dem Rotorblatt, dem Antriebsgehäuse, der Antriebswelle oder dem Träger eingespannt.

Gemäß einer Weiterbildung wird durch die Auswertung der Form der Strom-Zeit-Kurve eine Betätigungszeit der Bremse bestimmt. Diese Betätigungszeit ist insbesondere die oder eine aktuelle Betätigungszeit der Bremse. Bevorzugt wird der vorgegebene zeitliche Versatz in Abhängigkeit von der Betätigungszeit neu bestimmt und/oder adaptiert, insbesondere geändert. Vorzugsweise wird der vorgegebene zeitliche Versatz in Abhängigkeit von der Betätigungszeit geändert, insbesondere wenn der neu bestimmte und/oder adaptierte zeitliche Versatz von dem vorherigen, aktuellen oder bislang gültigen zeitlichen Versatz abweicht. Bevorzugt ist die Betätigungszeigt diejenige Zeit, die ab dem Bremsenbetätigungszeitpunkt bis zur Änderung des Betätigungszustands der Bremse vergeht. Gemäß der ersten Variante ist die Betätigungszeit insbesondere diejenige Zeit, die ab dem Bremsenbetätigungszeitpunkt bis zur Annahme des zweiten Betätigungszustands der Bremse vergeht. Beispielsweise ist bei der ersten Variante die Betätigungszeit diejenige Zeit, die ausgehend vom einem das Rotorblatt und/oder die oder eine Drehung des Rotorblatts um die Rotorblattachse blockierenden Zustand der Bremse und/oder vom ersten Betätigungszustand der Bremse bis zum Lösen der Bremse und/oder bis zum Abrücken der Ankerscheibe von der Bremsscheibe und/oder bis zum Annehmen des zweiten Betätigungszustands der Bremse vergeht. Gemäß der zweiten Variante ist die Betätigungszeit insbesondere diejenige Zeit, die ab dem Bremsenbetätigungszeitpunkt bis zur Annahme des ersten Betätigungszustands der Bremse vergeht. Beispielsweise ist bei der zweiten Variante die Betätigungszeit diejenige Zeit, die ausgehend vom gelösten Zustand und/oder vom zweiten Betätigungszustand der Bremse bis zum das Rotorblatt und/oder die oder eine Drehung des Rotorblatts um die Rotorblattachse blockierenden Zustand der Bremse und/oder bis zum Anlegen der Ankerscheibe an die Bremsscheibe und/oder bis zur Annahme des ersten Betätigungszustands vergeht.

Gemäß einer Ausgestaltung ändert sich der elektrische Strom und/oder Betätigungsstromanteil bis zu einem nach dem Bremsenbetätigungszeitpunkt liegenden ersten Zeitpunkt, zu dem vorzugsweise die Magnetkraft insbesondere der Kraft der Feder oder Federn entspricht oder näherungsweise entspricht. Bevorzugt ändert sich der elektrische Strom und/oder Betätigungsstromanteil bis zu einem nach dem ersten Zeitpunkt liegenden zweiten Zeitpunkt langsamer als zwischen dem Bremsenbetätigungszeitpunkt und dem ersten Zeitpunkt. Vorteilhaft ändert sich der elektrische Strom und/oder Betätigungsstromanteil nach dem zweiten Zeitpunkt stärker als zwischen dem ersten und dem zweiten Zeitpunkt.

Gemäß einer ersten Alternative steigt der elektrische Strom und/oder Betätigungsstromanteil z.B. bis zu einem nach dem Bremsenbetätigungszeitpunkt liegenden ersten Zeitpunkt an, zu dem vorzugsweise die Magnetkraft insbesondere der Kraft der Feder oder Federn entspricht oder näherungsweise entspricht. Bevorzugt steigt der elektrische Strom und/oder Betätigungsstromanteil bis zu einem nach dem ersten Zeitpunkt liegenden zweiten Zeitpunkt langsamer an als zwischen dem Bremsenbetätigungszeitpunkt und dem ersten Zeitpunkt. Vorteilhaft steigt der elektrische Strom und/oder Betätigungsstromanteil nach dem zweiten Zeitpunkt stärker an als zwischen dem ersten und dem zweiten Zeitpunkt. Die erste Alternative gilt insbesondere bei der ersten Variante oder alternativ bei der zweiten Variante.

Gemäß einer zweiten Alternative fällt der elektrische Strom und/oder Betätigungsstromanteil z.B. bis zu einem nach dem Bremsenbetätigungszeitpunkt liegenden ersten Zeitpunkt ab, zu dem vorzugsweise die Magnetkraft beispielsweise der Kraft der Feder oder Federn entspricht oder näherungsweise entspricht. Bevorzugt fällt der elektrische Strom und/oder Betätigungsstromanteil bis zu einem nach dem ersten Zeitpunkt liegenden zweiten Zeitpunkt langsamer ab als zwischen dem Bremsenbetätigungszeitpunkt und dem ersten Zeitpunkt.

Vorteilhaft fällt der elektrische Strom und/oder Betätigungsstromanteil nach dem zweiten Zeitpunkt stärker ab als zwischen dem ersten und dem zweiten Zeitpunkt. Die zweite Alternative gilt insbesondere bei der zweiten Variante oder alternativ bei der ersten Variante.

Der zeitliche Versatz wird insbesondere in Abhängigkeit von der Differenz aus dem zweiten Zeitpunkt und dem Bremsenbetätigungszeitpunkt adaptiert und/oder neu bestimmt. Die Differenz aus dem zweiten Zeitpunkt und dem Bremsenbetätigungszeitpunkt ist oder ergibt vorzugsweise die oder eine Betätigungszeit der Bremse. Die Auswertung der Form der Strom-Zeit-Kurve umfasst somit bevorzugt das Erkennen von Bereichen unterschiedlicher Steigung und/oder Änderungsgeschwindigkeit der Strom-Zeit-Kurve, woraus sich insbesondere der zweite Zeitpunkt ergibt.

Die Rotorblattverstelleinrichtung und/oder der Antrieb weist bevorzugt einen oder wenigstens einen Elektromotor auf, der, vorzugsweise unter Zwischenschaltung eines Getriebes, mit dem Rotorblatt verbunden ist. Der Elektromotor ist z.B. eine Drehstrommaschine, beispielsweise eine Asynchronmaschine oder eine Synchronmaschine. Alternativ ist der Elektromotor z.B. eine Gleichstrommaschine, beispielsweise eine Reihenschlussmaschine, eine Nebenschlussmaschine eine permanentmagneterregte Gleichstrommaschine oder eine Doppelschlussmaschine. Ferner weist die Rotorblattverstelleinrichtung und/oder der Antrieb bevorzugt einen oder wenigstens einen Umrichter auf, mittels welchem der Elektromotor elektrisch gespeist und/oder gesteuert wird oder werden kann. Der Umrichter ist bevorzugt mit einer Steuereinheit verbunden. Insbesondere weist der Umrichter die oder eine Steuereinheit auf. Vorzugsweise wird der Umrichter mittels der Steuereinheit gesteuert und/oder ist mittels der Steuereinheit steuerbar. Dem Umrichter wird vorzugsweise eine Eingangswechselspannung zugeführt. Insbesondere führt bei dem Umrichter die Eingangswechselspannung zu einer Ausgangswechselspannung. Bevorzugt ist der Umrichter aber auch derart betreibbar, dass die Eingangswechselspannung zu einer Ausgangsgleichspannung führt, die beispielsweise eine konstante oder eine gepulste Ausgangsgleichspannung ist oder sein kann. Bevorzugt ist oder bildet oder umfasst die Steuereinheit die Steuervorrichtung und/oder die Antriebssteuereinrichtung.

Der Umrichter umfasst bevorzugt eine gleichrichtende Eingangsstufe, eine Ausgangsstufe und einen zwischen die Eingangsstufe und die Ausgangsstufe geschalteten Zwischenkreis, der insbesondere ein Gleichstrom- oder Gleichspannungszwischenkreis ist. Vorteilhaft umfasst der Zwischenkreis einen elektrischen Kondensator. Vorzugsweise wird die Ausgangsstufe mittels der Steuereinheit gesteuert und/oder ist durch diese steuerbar. Ergänzend wird beispielsweise auch die Eingangsstufe mittels der Steuereinheit gesteuert und/oder ist durch diese steuerbar. Die Ausgangsstufe ist z.B. ein Wechselrichter, ein Gleichstromsteller oder ein Pulsweitenmodulator und/oder die Ausgangsstufe arbeitet z.B. als Wechselrichter, als Gleichstromsteller oder als Pulsweitenmodulator. Insbesondere ist die Ausgangsstufe eine Transistorausgangsstufe.

Der Elektromotor weist bevorzugt ein Motorgehäuse und eine relativ zu diesem drehbare Motorwelle auf. Insbesondere bildet das Motorgehäuse das Antriebsgehäuse. Vorzugsweise bildet die Motorwelle die Antriebswelle.

Die Rotornabe ist bevorzugt um eine Rotorachse drehbar. Vorteilhaft ist die Rotornabe um die oder eine Rotorachse, insbesondere an einem Trägerelement, drehbar gelagert. Das Trägerelement ist z.B. ein Maschinenträger. Bevorzugt erstreckt sich die Rotorblattachse quer oder annähernd quer zur Rotorachse von der Rotornabe weg. Die Rotornabe und das Rotorblatt sind insbesondere Teil eines Rotors, der durch die an dem Rotorblatt angreifende Wind- oder Wasserströmung um die Rotorachse gedreht wird oder werden kann. Vorzugsweise weist der Rotor wenigstens ein zusätzliches Rotorblatt auf, wobei die Rotorblätter insbesondere gleichmäßig verteilt rings der Rotorachse angeordnet sind. Der Rotor und/oder die Rotornabe ist bevorzugt mechanisch mit einem elektrischen Generator gekoppelt. Vorzugsweise treibt der Rotor und/oder die Rotornabe den oder einen elektrischen Generator zum Erzeugen elektrischer Energie an.

Bevorzugt wird die Bremse über oder durch die Steuervorrichtung oder Steuereinheit mit elektrischer Spannung und/oder elektrischem Strom versorgt. Die Steuervorrichtung oder Steuereinheit bildet oder umfasst beispielsweise die elektrische Spannungsquelle. Vorteilhaft wird Steuervorrichtung oder Steuereinheit durch eine elektrische Energieversorgungeinrichtung mit elektrischer Energie versorgt. Die elektrische Energieversorgungeinrichtung ist oder umfasst z.B. ein elektrisches Stromversorgungsnetz und/oder eine Notstromversorgungseinrichtung und/oder einen oder wenigstens einen elektrischen Energiespeicher. Vorzugsweise wird der durch die Bremse und/oder durch den Elektromagnet fließende elektrische Strom gemessen, insbesondere mittels der Steuervorrichtung oder Steuereinheit. Vorteilhaft wird die Form der Strom-Zeit-Kurve, bevorzugt beim Ein- und/oder Ausschalten der Bremse, ausgewertet, insbesondere mittels der Steuervorrichtung oder Steuereinheit. Aus der Stärke und/oder dem Verlauf des gemessenen Stroms und/oder durch die oder eine Auswertung des gemessenen Stroms und/oder der Form der Strom-Zeit-Kurve ergeben sich insbesondere Informationen über den Ansteuerungszustand der Bremse, sodass z.B. Aussagen darüber getroffen werden können, ob kein Strom durch die Bremse fließt und/oder ob ein Kurzschluss in der Bremse vorliegt und/oder ob ein Defekt in der Ansteuerung der Bremse und/oder in der Steuervorrichtung vorliegt.

Die Steuervorrichtung oder Steuereinheit umfasst bevorzugt einen Digitalrechner. Insbesondere umfasst die Steuervorrichtung oder Steuereinheit ein Programm (Software) zur Auswertung der Form der Strom-Zeit-Kurve. Vorzugsweise läuft die Software in der Steuervorrichtung oder Steuereinheit und/oder dem Digitalrechner. Insbesondere wird die Form der Strom-Zeit-Kurve mittels der Software ausgewertet. Bevorzugt umfasst die Steuervorrichtung oder Steuereinheit einen Speicher. Insbesondere wird die gemessene Strom-Zeit-Kurve in Form von Messwerten in dem Speicher gespeichert. Ergänzend oder alternativ ist eine Echtzeit-Auswertung der Strom-Zeit-Kurve oder der Form der Strom-Zeit-Kurve möglich.

Eine übergeordnete Steuerung der Wind- oder Wasserkraftanlage steuert bevorzugt die Steuervorrichtung und/oder die Steuereinheit und/oder die Antriebssteuereinrichtung. Die übergeordnete Steuerung der Wind- oder Wasserkraftanlage ist oder bildet oder umfasst beispielsweise die Steuereinheit und/oder die Steuervorrichtung und/oder die Antriebssteuereinrichtung.

Bevorzugt werden durch die, insbesondere softwaretechnische, Auswertung der Form der Strom-Zeit-Kurve Informationen über das Öffnungsverhalten der Bremse und/oder der Ankerscheibe der Bremse gewonnen und/oder generiert. Somit wird eine Adaptierung des zeitlichen Versatzes zwischen dem Bremsenbetätigungszeitpunkt und dem Antriebsbetätigungszeitpunkt ermöglicht. Dauerhaft fest definierte Versatzzeiten und daraus resultierende lange Reaktionszeiten und/oder überlappende Antriebs- und Bremsmomente, welche insbesondere mit den genannten Negativeffekten verbunden sind, können dadurch vermieden werden.

Bevorzugt werden durch die, insbesondere softwaretechnische, Auswertung der Form der Strom-Zeit-Kurve auch Informationen über den Status der Bremse gewonnen und/oder generiert und insbesondere einer Überwachungsvorrichtung oder der übergeordneten Steuerung der Wind- oder Wasserkraftanlage zugeführt. Somit kann die Überwachungsvorrichtung oder übergeordnete Steuerung der Wind- oder Wasserkraftanlage auf den Status der Bremse reagieren. Die Informationen über den Status der Bremse umfassen z.B. Informationen darüber, ob die Bremse ausgefallen, blockiert, geöffnet oder nicht geöffnet ist. Auf Basis dieser Information können Notsituationen vermieden werden und vorbeugende und planbare Serviceeinsätze stattfinden, die einem Stillstand der Wind- oder Wasserkraftanlage oder auch einer möglichen Beschädigung derselben entgegenwirken.

Bevorzugt werden durch die, insbesondere softwaretechnische, Auswertung der Form der Strom-Zeit-Kurve auch Informationen gewonnen und/oder generiert, die Aussagen über einen sich ändernden Luftspalt der Bremse und/oder über den Verschleiß eines Bremsbelags der Bremse ermöglichen. Auf Basis dieser Information können vorbeugende und planbare Serviceeinsätze stattfinden, die einem Stillstand der Windkraft- oder Wasserkraftanlage oder auch einer möglichen Beschädigung derselben entgegenwirken. Bei dem Luftspalt der Bremse handelt es sich insbesondere um einen Luftspalt oder Spalt zwischen der Ankerscheibe und der Bremsscheibe.

In der Regel befindet sich die Rotorblattverstelleinrichtung (Pitchantrieb) über einen Großteil ihrer aktiven Betriebszeit im Wechsel zwischen Stillstand und Positionierbetrieb, in dem das Rotorblatt gedreht wird. Die durch die Erfindung ermöglichte oder erzielte Reduktion der Reaktionszeit ermöglicht somit insbesondere verbesserte dynamische Übergänge und dadurch eine Steigerung der Energieausbeute bei wechselnden Wind- oder Wasserverhältnissen.

Ferner kann durch die Erfindung insbesondere die thermische Belastung des Umrichters und/oder des Elektromotors in den Übergängen zwischen Stillstand und Positionierbetrieb reduziert werden, wodurch eine verbesserte Lebensdauer und ggf. auch höhere Funktionssicherheit der Rotorblattverstelleinrichtung erreicht wird.

Auch kann durch die Erfindung die Aufnahme benötigter elektrischer Energie insbesondere auf eine tatsächlich erforderliche Abgabeleistung des Antriebs reduziert werden, da ein unnötiger Energieverbrauch durch mögliches Gegeneinanderarbeiten von Bremse und Antrieb verhindert werden kann. Insbesondere kann die elektrische Energieaufnahme angepasst werden, sodass bei fehlendem Netz z.B. eine längere Nutzungsdauer der oder einer mit der Rotorblattverstelleinrichtung verbundenen oder verbindbaren Notstromversorgungseinrichtung (Backup-Puffersystem) erzielbar ist, welche insbesondere elektrische Energiespeicher, wie z.B. Akkumulatoren und/oder elektrische Kondensatoren aufweist. Ferner kann durch die Erfindung beispielsweise die Lebensdauer der Notstromversorgungseinrichtung aufgrund der geringeren Spitzenbelastung bei fehlendem Netz in den Übergängen vergrößert werden. Bei einem Ausfall des Netzes und der Notstromversorgungseinrichtung wird die Bremse insbesondere blockiert und vorzugsweise über das Verfahren überwacht.

Die Erfindung ermöglicht insbesondere, dass vorbeugende und planbare Serviceeinsätze stattfinden können, die einem Stillstand oder auch einer möglichen Beschädigung der Windkraft- oder Wasserkraftanlage entgegenwirken.

Die oder eine übergeordnete Steuerung der Windkraft- oder Wasserkraftanlage erhält durch die Erfindung insbesondere Informationen darüber, ob die Bremse der Rotorblattverstelleinrichtung tatsächlich geöffnet oder nicht geöffnet ist, wodurch verbesserte Aussagen über den Zustand der Windkraft- oder Wasserkraftanlage möglich sind und somit Notsituationen vermieden bzw. verhindert werden können.

Bevorzugt erfolgt die Ansteuerung der Bremse mit elektrischer Energie über oder durch die Steuervorrichtung, die in einer vorteilhaften Ausgestaltung z.B. einen Teil des Umrichters bildet. Der durch die Bremse fließende und/oder dieser zugeführte elektrische Strom wird insbesondere von und/oder in der Steuervorrichtung gemessen. Das Messen des durch die Bremse fließenden und/oder dieser zugeführten elektrischen Stroms und/oder das Erfassen der Messwerte erfolgt bevorzugt mittels eines Stromsensors, der insbesondere mit der Steuervorrichtung verbunden ist. Vorzugsweise ist der Stromsensor ein Hall-Stromsensor. Somit kann die Form der Strom-Zeit-Kurve ausreichend genau und schnell genug erfasst werden. Die elektrische Energieversorgung der Bremse erfolgt bevorzugt mit einer Gleichspannung. Die elektrische Spannung beträgt beispielsweise 24 V.

In einer weiteren Ausgestaltung ist eine Überlagerung der Gleichspannung und/oder des Betätigungsspannungsanteils mit einem Wechselspannungsanteil möglich, sodass die, insbesondere softwaretechnische, Auswertung der Form der erfassten Strom-Zeit-Kurve ebenfalls oder auch alternativ die gewünschten Informationen ergibt. Der Wechselspannungsanteil kann dabei auch durch zeitlich kurze Ausschaltzyklen realisiert werden, die vorzugsweise derart kurz sind, dass durch die Trägheit der Bremse keine mechanische Reaktion erfolgen kann.

Die oder eine Software zur Auswertung der Form der Strom-Zeit-Kurve läuft z.B. in der Steuereinheit des Umrichters, die in einer vorteilhaften Ausgestaltung auch die Bremse steuert, die aktuelle Bestromung des Elektromotors oder dessen Motorwicklung definiert und/oder die Temperatur des Elektromotors überwacht und somit über eine Vielzahl von Informationen und/oder insbesondere über alle notwendigen Informationen über den Zustand des Antriebs und zur Ansteuerung der Bremse verfügt.

Bevorzugt wird mittels der Software der Steuereinheit die Form der Strom-Zeit-Kurve ggfs. auch unter Berücksichtigung von Zusatzinformationen, z.B. über den Einschalt- oder Ausschaltzeitpunkt und/oder die aktuelle Motortemperatur, ausgewertet. Die gewonnenen Informationen werden vorzugsweise permanent mit den bisherigen Ergebnissen verglichen, wodurch eine Anpassung des zeitlichen Versatzes zwischen der Ansteuerung der Bremse und der Bestromung des Antriebs, insbesondere gleitend, ermöglicht wird, und ferner bevorzugt Aussagen oder Informationen über den Schaltzustand der Bremse sowie über den Verschleiß des Bremsbelags realisierbar sind. Informationen über den Schaltzustand der Bremse umfassen z.B. Informationen darüber, ob die Bremse ausgefallen, blockiert, geöffnet oder nicht geöffnet ist.

Die Erfindung wird nachfolgend anhand einer bevorzugten Ausführungsform unter Bezugnahme auf die Zeichnung beschrieben. In der Zeichnung zeigen:
Fig. 1: eine schematische Darstellung einer Windkraftanlage,
Fig. 2 eine schematische Draufsicht auf einen Rotor der Windkraftanlage,
Fig. 3: ein schematisches Blockschaltbild einer Rotorblattverstelleinrichtung der Windkraftanlage,
Fig. 4: ein schematisches Schaltbild eines Umrichters der Rotorblattverstelleinrichtung,
Fig. 5 eine perspektivische und teilweise geschnittene Ansicht einer elektromagnetischen Bremse der Rotorblattverstelleinrichtung,
Fig. 6 ein Strom-Zeit-Diagramm eines durch die Bremse fließenden elektrischen Stroms und ein Spannungs-Zeit-Diagramm einer an die Bremse angelegten elektrischen Spannung und
Fig. 7 einen Zeitstrahl, der einen zeitlichen Versatz zwischen dem Ansteuern der Bremse und eines Elektromotors der Rotorblattverstelleinrichtung veranschaulicht.

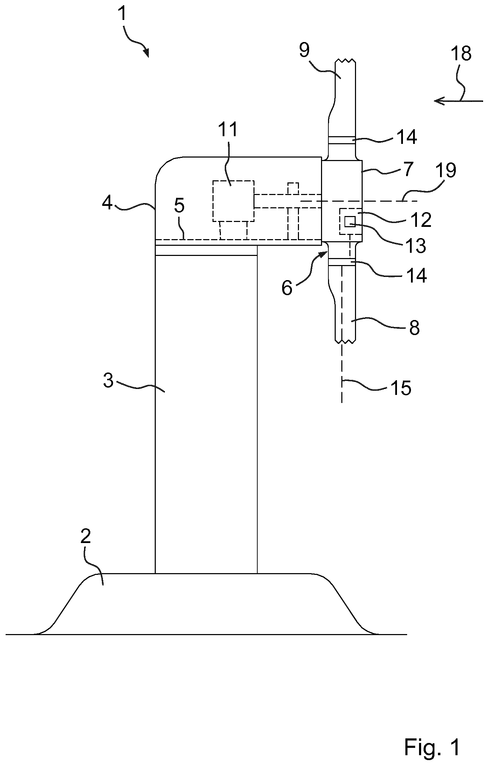

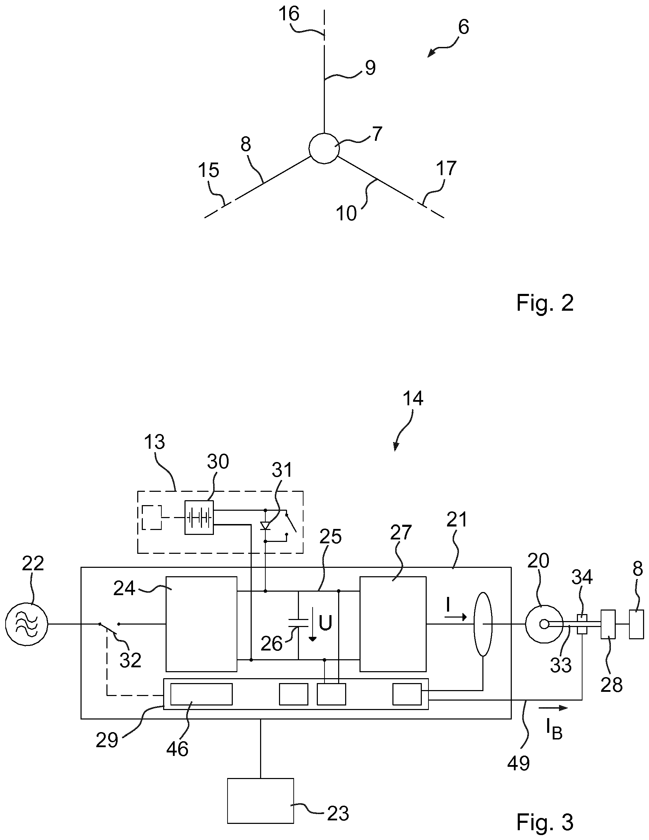

Aus Fig. 1 ist eine schematische Darstellung einer Windkraftanlage 1 ersichtlich, die einen auf einem Fundament 2 aufstehenden Turm 3 umfasst, an dessen dem Fundament 2 abgewandten Ende ein Maschinenhaus 4 angeordnet ist. Das Maschinenhaus 4 weist einen Maschinenträger 5 auf, an dem ein Rotor 6 drehbar gelagert ist, der eine Rotornabe 7 und mehrere mit dieser verbundene Rotorblätter 8, 9 und 10 umfasst (siehe auch Fig. 2). Der Rotor 6 ist mechanisch mit einem elektrischen Generator 11 gekoppelt, der in dem Maschinenhaus 4 angeordnet und an dem Maschinenträger 5 befestigt ist.

In dem Rotor 6 ist ein Rotorblattverstellsystem (Pitchsystem) 12 angeordnet, welches Notstromversorgungseinrichtungen 13 umfassende Rotorblattverstelleinrichtungen (Pitchantriebe) 14 aufweist, mittels welchen die Rotorblätter 8, 9 und 10 um ihre jeweilige Längsachse (Rotorblattachse) 15, 16 bzw. 17 relativ zur Rotornabe 7 gedreht werden können (siehe auch Fig. 2). Jedem der Rotorblätter ist dabei eine der Rotorblattverstelleinrichtungen 14 zugeordnet. Der Rotor 6 kann durch Windkraft 18 um eine Rotorachse 19 gedreht werden.

Fig. 2 zeigt eine schematische Draufsicht auf den Rotor 6, sodass die drei Rotorblätter 8, 9 und 10 ersichtlich sind. Alternativ können auch lediglich zwei oder mehr als drei Rotorblätter vorgesehen sein.

In Fig. 3 ist ein schematisches Blockschaltbild einer der Rotorblattverstelleinrichtungen 14 mit zugehöriger Notstromversorgungseinrichtung 13 dargestellt, wobei ein Elektromotor 20 elektrisch mit einem Umrichter 21 gekoppelt ist, der mit einem elektrischen Versorgungsnetz (Primär-Energieversorgung) 22 verbunden ist und aus diesem gespeist wird. Ferner ist der Umrichter 21 mit einer Steuerung 23 verbunden, mittels welcher die Rotorblattverstelleinrichtung 14 gesteuert wird. Die Steuerung 23 ist z.B. eine übergeordnete Steuerung der Windkraftanlage 1. Der Umrichter 21 umfasst einen Gleichrichter 24, einen Zwischenkreis 25 mit Kondensator 26 und eine Ausgangsstufe 27. Der Elektromotor 20 ist unter Zwischenschaltung eines Getriebes 28 mechanisch mit dem Rotorblatt 8 gekoppelt, welches mittels des Elektromotors 20 um die Rotorblattachse 15 drehbar ist. Ferner umfasst der Umrichter 21 eine Steuereinheit 29, mittels welcher der Umrichter 21 steuerbar ist.

Die Notstromversorgungseinrichtung 13 umfasst einen Energiespeicher 30, der über eine Diode 31 auf den Zwischenkreis 25 geschaltet ist. Die Primär-Energieversorgung 22 ist mit dem Eingang des Gleichrichters 24 unter Zwischenschaltung eines Schalters 32 verbunden, der mittels der Steuereinheit 29 betätigt werden kann. An der Motorwelle 33 des Motors 20 ist eine Bremse 34 vorgesehen, mittels welcher eine Drehung der Motorwelle 33 freigegeben und blockiert werden kann, sodass mittels der Bremse 34 auch eine Drehung des Rotorblatts 8 um die Rotorblattachse 15 freigegeben und blockiert werden kann. Die Bremse 34 wird mittels der Steuereinheit 29 gesteuert. Soll das Rotorblatt 8 um seine Rotorblattachse 15 gedreht werden, so wird die Bremse 34 gelöst. Soll das Rotorblatt 8 nicht gedreht werden, so wird eine Drehung des Rotorblatts 8 um die Rotorblattachse 15 mittels der Bremse 34 blockiert.

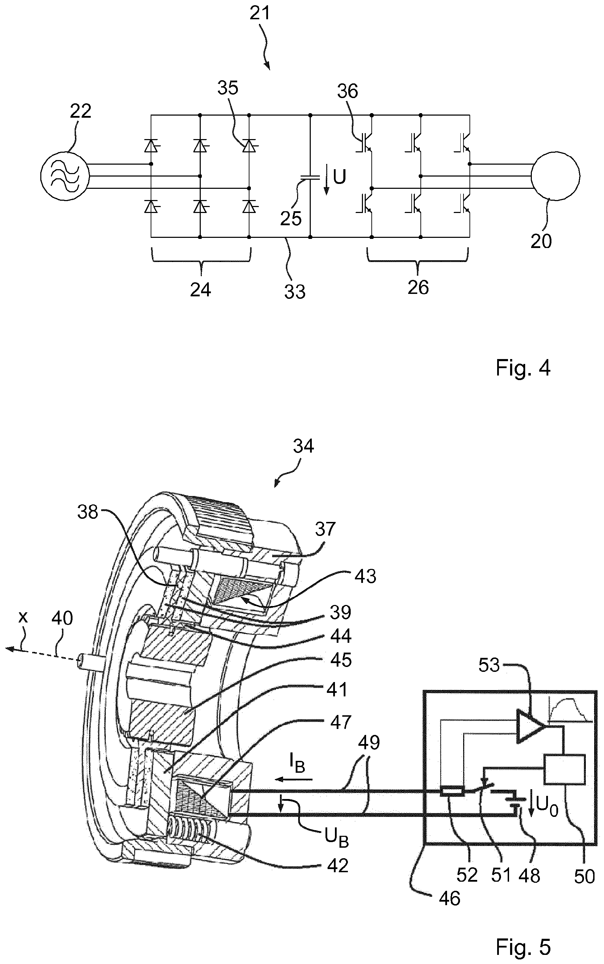

Aus Fig. 4 ist ein schematisches Schaltbild des Umrichters 21 ersichtlich, wobei der Gleichrichter 24 sechs Thyristoren 35 umfasst und somit als aktivierbarer Gleichrichter ausgebildet ist. Die Gate-Anschlüsse der Thyristoren 35 werden mittels der Steuereinheit 29 angesteuert, sodass mittels dieser ein Aktivieren und ein Deaktivieren des Gleichrichters 24 möglich ist. Die Ausgangsstufe 27 ist als Transistorausgangsstufe ausgebildet und weist sechs Transistoren 36 auf, deren Gate- oder Basisanschlüsse mittels der Steuereinheit 29 angesteuert werden. Somit ist der dem Motor 20 zugeführte Motorstrom I mittels der Ausgangsstufe 27 und der Steuereinheit 29 steuerbar. Die Transistoren 36 sind hier als Bipolartransistoren mit isolierter Gate-Elektrode (IGBT) ausgebildet.

Aus Fig. 5 ist eine perspektivische und teilweise geschnittene Ansicht der Bremse 34 ersichtlich, die einen Träger (Spulenträger) 37, eine an dem Träger 37 gelagerte Bremsscheibe 38 mit Bremsbelägen 39, eine an dem Träger 37 relativ zu der Bremsscheibe 38 entlang einer Achse 40 verschiebbar gelagerte Ankerscheibe 41, mehrere an dem Träger 37 gelagerte Druckfedern 42, welche die Ankerscheibe 41 im stromlosen Zustand der Bremse 34 in einer entlang der Achse 40 verlaufenden Richtung x gegen die Bremsscheibe 38 drücken, und einen Elektromagneten 43 aufweist, durch welchen ein elektrischer Strom I_{B} fließen kann, wobei der Elektromagnet 43 im bestromten Zustand die Ankerscheibe 41 durch Magnetkraft gegen die Kraft der Federn 42 von der Bremsscheibe 38 abrückt oder im Abstand zu dieser hält.

Die Bremsscheibe 38 ist an einem Rotorelement 44 befestigt, welches über eine Zahnnabe 45 drehstarr mit der Motorwelle 33 verbunden ist, die über das Getriebe 28 die Stellung des Rotorblatts 8 verändern kann. Das Rotorelement 44 ist vorzugsweise hülsenförmig. Insbesondere ist das Rotorelement 44 starr oder drehstarr mit der Bremsscheibe 38 verbunden. Der Elektromagnet 43 umfasst eine fest mit dem Träger 37 verbundene elektrische Spule 47. Die am Umfang des bezüglich der Achse 40 rotationssymmetrisch oder im Wesentlichen rotationssymmetrisch ausgebildeten Trägers 37 verteilt angeordneten Druckfedern 42 drücken die Ankerscheibe 41 in Richtung der Bremsscheibe 38 mit den Bremsbelägen 39. Die Bremse 34 ist im nicht bestromten Zustand im Eingriff, da die Ankerscheibe 41 gegen die Bremsscheibe 38 gedrückt wird, sodass die Motorwelle 33 mit dem Haltemoment der Bremse 34 beaufschlagt wird, welches sich insbesondere aus der Bremsengröße und der Kraft der Druckfedern 42 ergibt. Ist die Bremse 34 im Eingriff, ist eine Drehung der Motorwelle 33 blockiert. Die Bremse 34 wird geöffnet oder gelöst, indem eine Steuervorrichtung 46 mittels einer schematisch dargestellten Spannungsquelle 48 eine Spannung Uo an die Spule 47 des Elektromagneten 43 anlegt. Durch das Anlegen der Spannung Uo an die Spule 47 fließt der oder ein Strom I_{B} in die Spule 47, wodurch diese ein Magnetfeld aufbaut. Das Magnetfeld wirkt den Druckfedern 42 entgegen, wodurch die Ankerscheibe 41 angezogen wird und sich entlang der Achse 40 in Richtung der Spule 47 bewegt. Die Bewegung der Ankerscheibe 41 erfolgt solange, bis diese an der Spule 47 oder an einem an dem Spulenträger 37 vorgesehen Anschlag anliegt, sodass die Bremsscheibe 38 vollständig freigegeben ist. Ist die Bremse 34 geöffnet oder gelöst, ist eine Drehung der Motorwelle 33 freigegeben.

Der Spulenträger 37 dient im dargestellten Beispiel einerseits als Anschlag für die Ankerscheibe 41 und andererseits zur Aufnahme der Spule 47.

Die Steuervorrichtung 46 ist über elektrische Leitungen 49 mit der Spule 47 verbunden. Von einer einen Digitalrechner umfassenden Steuereinrichtung 50 wird die Spannungsquelle 48 mittels einer schematisch dargestellten elektrischen Schalteinrichtung 51 zum Anlegen der Spannung Uo an die Spule 47 angesteuert, wobei die Spannung Uo entweder eine konstante Gleichspannung oder eine Gleichspannung ist, die einen konstanten Betätigungsspannungsanteil und einen diesem überlagerten Wechselspannungsanteil aufweist. Alternativ oder ergänzend ist es möglich, mittels der Schalteinrichtung 51 der Gleichspannung Uo einen Wechselspannungsanteil zu überlagern und/oder die Gleichspannung Uo zu pulsen oder einer Pulsweitenmodulation zu unterziehen. Der in der Spule 47 fließende Strom I_{B} und/oder die Stromaufnahme der Spule 47 wird über einen schematisch dargestellten Stromsensor 52 in Abhängigkeit von der Zeit t gemessen. Das dadurch erfasste Stromsignal wird über eine schematisch dargestellte Anpassungsschaltung 53 zur Steuereinrichtung 50 geführt, welche eine Software zur Ermittlung von gewünschten Informationen umfasst. Die Steuervorrichtung 46 ist gemäß dieser Ausführungsform durch die Steuereinheit 29 des Umrichters 21 gebildet. Alternativ kann die Steuervorrichtung 46 z.B. aber auch separat von der Steuereinheit 29 vorgesehen sein.

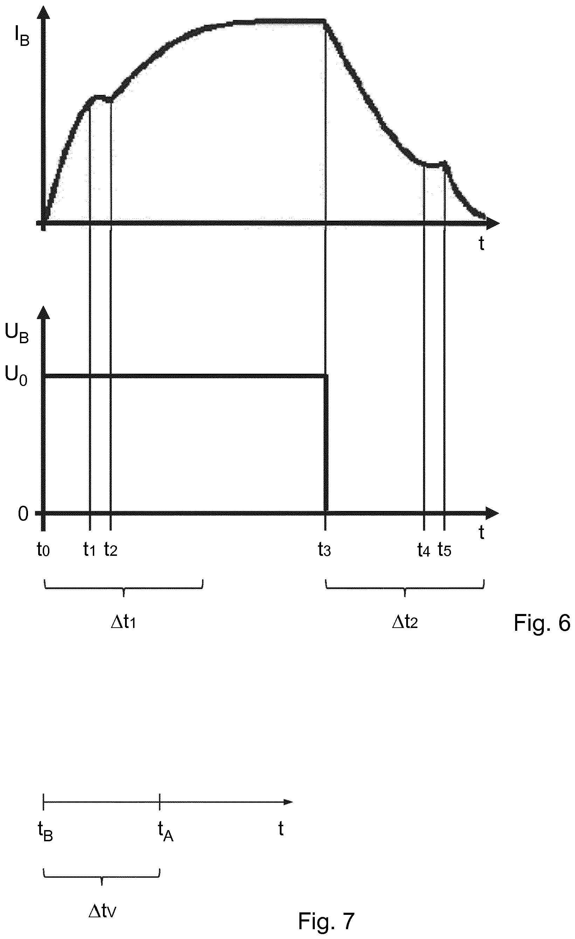

Aus Fig. 6 ein Strom-Zeit-Diagramm des durch die Bremse 34 fließenden elektrischen Stroms I_{B} und ein Spannungs-Zeit-Diagramm der an der Bremse 34 anliegenden elektrischen Spannung UB ersichtlich, wie sie sich z.B. beim Ein- und Ausschalten der Bremse 34 ergeben. Dabei wird die Zeit mit dem Buchstaben t gekennzeichnet.

Zu einem Zeitpunkt to wird die Spannung Uo an die Spule 47 der Bremse 34 angelegt, sodass der durch die Spule 47 fließende Strom I_{B} ansteigt. Die Spannung Uo ist dabei größer als Null. Die durch den Strom I_{B} hervorgerufene magnetische Kraft hebt zum Zeitpunkt t₁ die Kraft der Druckfedern 42 auf, sodass sich die Ankerscheibe 41 von der Bremsscheibe 38 löst. Während der Bewegung der Ankerscheibe 41 in Richtung Spule 47 steigt der Strom I_{B} nur noch langsam an. Am Ende der Bewegung, d.h. sobald die Ankerscheibe 41 an der Spule 47 oder dem Anschlag zu einem Zeitpunkt t₂ anliegt, erfolgt ein stärkeres Ansteigen des Stroms I_{B}. Die Differenz t₂ - to ergibt die Betätigungszeit zum Öffnen der Bremse 34 zu den derzeit aktuellen Betriebsbedingungen. Wird der Strom I_{B} über ein den Zeitpunkt to umfassendes oder mit diesem beginnendes, ausreichend langes Zeitintervall Δt₁ gemessen, lassen sich durch eine Analyse der Form der Strom-Zeit-Kurve die Zeitpunkte t₁ und t₂ ermitteln.

Zu einem Zeitpunkt t₃ wird die an der Spule 47 der Bremse 34 anliegende Spannung UB von Uo auf Null gesetzt, sodass der durch die Spule 47 fließende Strom I_{B} abfällt. Die durch den Strom I_{B} hervorgerufene magnetische Kraft ist zum Zeitpunkt t₄ auf die Kraft der Druckfedern 42 abgefallen, sodass die Ankerscheibe 41 sich von der Spule 47 oder dem Anschlag löst. Während der Bewegung der Ankerscheibe 41 in Richtung der Bremsscheibe 38 fällt der Strom I_{B} nur noch langsam ab. Am Ende der Bewegung, d.h. sobald die Ankerscheibe 41 an der Bremsscheibe 38 zu einem Zeitpunkt t₅ anliegt, erfolgt ein stärkeres Abfallen des Stroms I_{B}. Die Differenz t₅ - t₃ ergibt die Betätigungszeit zum Schließen der Bremse 34 oder zum Annehmen des eine Drehung des Rotorblatts 8 blockierenden Zustands der Bremse 34 zu den derzeit aktuellen Betriebsbedingungen. Wird der Strom I_{B} über ein den Zeitpunkt t₃ umfassendes oder mit diesem beginnendes, ausreichend langes Zeitintervall Δt₂ gemessen, lassen sich durch eine Analyse der Form der Strom-Zeit-Kurve die Zeitpunkte t₄ und t₅ ermitteln.

Aus Fig. 7 ist ein Zeitstrahl ersichtlich, wobei zu einem Zeitpunkt t_{B} die eine Drehung des Rotorblatts 8 blockierende Bremse 34 zum Öffnen angesteuert wird. Der Zeitpunkt t_{B} entspricht insbesondere dem Zeitpunkt to. Ferner wird der ruhende Elektromotor 20 zu einem Zeitpunkt t_{A} zum Drehen des Rotorblatts 8 angesteuert. Der zeitliche Versatz zwischen den Zeitpunkten t_{A} und t_{B} ist mit Δt_{V} bezeichnet. Ist die Ansprechzeit des Elektromotors 20 bekannt oder gegenüber der Betätigungszeit der Bremse 34 vernachlässigbar, lässt sich aus der Differenz t₂ - to ein Sollwert für den zeitlichen Versatz Δt_{V} ermitteln, ggf. unter Berücksichtigung der Ansprechzeit des Elektromotors 20. Der aktuell gültige zeitlichen Versatz Δt_{V} kann dann durch diesen Sollwert ersetzt werden, sodass sich eine optimale Einstellung für den zeitlichen Versatz ergibt. Durch die optimale Einstellung des zeitlichen Versatzes Δt_{V} lässt sich einerseits sicherstellen, dass die Bremse 34 gelöst ist, wenn der Elektromotor 20 das Drehmoment zum Drehen des Rotorblatts 8 aufbringt, und andererseits sicherstellen, dass die Bremse 34 noch nicht gelöst ist, wenn der Elektromotor 20 das Drehmoment zum Drehen des Rotorblatts noch nicht aufgebracht hat. Unter Ansprechzeit des Elektromotors 20 ist in diesem Fall insbesondere diejenige Zeit zu verstehen, die vom Ansteuern des ruhenden Elektromotors 20 zum Drehen des Rotorblatts 8 bis Aufbringen des Drehmoments zum Drehen des Rotorblatts 8 vergeht.

### Bezugszeichenliste

1 Windkraftanlage
2 Fundament
3 Turm
4 Maschinenhaus
5 Maschinenträger
6 Rotor
7 Rotornabe
8 Rotorblatt
9 Rotorblatt
10 Rotorblatt
11 elektrischer Generator
12 Rotorblattverstellsystem
13 Notstromversorgungseinrichtung
14 Rotorblattverstelleinrichtung
15 Rotorblattachse
16 Rotorblattachse
17 Rotorblattachse
18 Wind
19 Rotorachse
20 Elektromotor
21 Umrichter
22 Versorgungsnetz
23 Steuerung
24 Gleichrichter
25 Zwischenkreis
26 Kondensator
27 Ausgangsstufe
28 Getriebe
29 Steuereinheit des Umrichters
30 Energiespeicher
31 Diode
32 Schalter
33 Motorwelle
34 Bremse
35 Thyristor
36 Transistor / IGBT
37 Träger der Bremse
38 Bremsscheibe
39 Bremsbelag
40 Achse der Bremse
41 Ankerscheibe
42 Feder
43 Elektromagnet
44 Rotorelement
45 Zahnnabe
46 Steuervorrichtung
47 elektrische Spule
48 Energiequelle
49 elektrische Leitung
50 Steuereinrichtung
51 Schalteinrichtung
52 Stromsensor
53 Anpassungsschaltung
x Richtung

## Patentansprüche

1. Verfahren zum Steuern einer Rotorblattverstelleinrichtung (14) einer Wind- oder Wasserkraftanlage (1), wobei die Rotorblattverstelleinrichtung (14) einen mit einem einer Wind- oder Wasserströmung ausgesetzten Rotorblatt (8) verbundenen Antrieb (20) zum Drehen des Rotorblatts (8) um eine Rotorblattachse (15) relativ zu einer Rotornabe (7), an der das Rotorblatt (8) um die Rotorblattachse (15) drehbar gelagert ist, und eine mit dem Rotorblatt (8) verbundene elektromagnetische Bremse (34) zum Blockieren einer Drehung des Rotorblatts (8) um die Rotorblattachse (15) aufweist, wobei die Bremse (34) zum Ändern ihres Betätigungszustands zu einem Bremsenbetätigungszeitpunkt (t_{B}) angesteuert wird und wobei der Antrieb (20) zum Ändern seines Antriebszustands zu einem Antriebsbetätigungszeitpunkt (t_{A}) angesteuert wird, der zu dem Bremsenbetätigungszeitpunkt (t_{B}) einen vorbestimmten zeitlichen Versatz (Δt_{V}) aufweist, **dadurch gekennzeichnet, dass** ein durch die Bremse (34) fließender elektrischer Strom (I_{B}) gemessen wird, die Form der sich daraus ergebenden Strom-Zeit-Kurve ausgewertet wird und der zeitliche Versatz (Δt_{V}) in Abhängigkeit vom Ergebnis dieser Auswertung neu bestimmt und/oder adaptiert wird.

2. Verfahren nach Anspruch 1, **dadurch gekennzeichnet, dass** der zeitliche Versatz (Δt_{V}) nach der Auswertung der Form der Strom-Zeit-Kurve geändert wird.

3. Verfahren nach Anspruch 1 oder 2, **dadurch gekennzeichnet, dass** der durch die Bremse (34) fließende elektrische Strom (I_{B}) kontinuierlich oder über ein Zeitintervall (Δt₁) gemessen wird, wobei der Bremsenbetätigungszeitpunkt (t_{A}) am Beginn oder innerhalb des Zeitintervalls (Δt₁) liegt und der Zeitpunkt des Wechsels des Betätigungszustands (t₂) am Ende oder innerhalb des Zeitintervalls (Δt₁) liegt.

4. Verfahren nach einem der vorangehenden Ansprüche, **dadurch gekennzeichnet, dass** der Antriebsbetätigungszeitpunkt (t_{A}) um den zeitlichen Versatz (Δt_{V}) nach dem Bremsenbetätigungszeitpunkt (t_{B}) liegt.

5. Verfahren nach einem der vorangehenden Ansprüche, **dadurch gekennzeichnet, dass** der Antrieb (20) zum Antriebsbetätigungszeitpunkt (t_{A}) zum Drehen des Rotorblatts (8) angesteuert wird und die Bremse (34) zum Bremsenbetätigungszeitpunkt (t_{B}) zum Freigeben des Rotorblatts (8) angesteuert wird.

6. Verfahren nach einem der vorangehenden Ansprüche, **dadurch gekennzeichnet, dass** die Bremse (34) zum Bremsenbetätigungszeitpunkt (t_{B}) das Rotorblatt (8) blockiert und der Antrieb (20) zum Antriebsbetätigungszeitpunkt (t_{A}) ruht.

7. Verfahren nach einem der vorangehenden Ansprüche, **dadurch gekennzeichnet, dass** die Bremse (34) zum Bremsenbetätigungszeitpunkt (t_{B}) an eine elektrische Spannungsquelle (48) angeschlossen wird, welche den elektrischen Strom (I_{B}) liefert.

8. Verfahren nach Anspruch 7, **dadurch gekennzeichnet, dass** die von der Spannungsquelle (48) zur Verfügung gestellte elektrische Spannung (Uo) eine Gleichspannung ist.

9. Verfahren nach einem der vorangehenden Ansprüche, **dadurch gekennzeichnet, dass** die elektromagnetische Bremse (34) einen Träger (37), wenigstens eine Bremsscheibe (38), wenigstens eine an dem Träger (37) relativ zu der Bremsscheibe (38) verschiebbar gelagerte Ankerscheibe (41), eine oder mehrere an dem Träger (37) gelagerte und die Ankerscheibe (41) in Richtung auf die Bremsscheibe (38) drückende Federn (42) und wenigstens einen Elektromagneten (43) aufweist, der im bestromten Zustand die Ankerscheibe (41) durch Magnetkraft gegen die Kraft der Feder oder Federn (42) von der Bremsscheibe (38) abrückt oder im Abstand zu dieser hält.

10. Verfahren nach einem der vorangehenden Ansprüche, **dadurch gekennzeichnet, dass** durch die Auswertung der Form der Strom-Zeit-Kurve eine ab dem Bremsenbetätigungszeitpunkt (t_{B}) bis zur Änderung des Betätigungszustands vergehende Betätigungszeit (t₂-t₀) der Bremse (34) bestimmt und der vorgegebene zeitliche Versatz (Δt_{V}) in Abhängigkeit von dieser Betätigungszeit (t₂-t₀) neu bestimmt und/oder adaptiert wird.

11. Verfahren nach den Ansprüchen 9 und 10, **dadurch gekennzeichnet, dass** der elektrische Strom (I_{B}) bis zu einem nach dem Bremsenbetätigungszeitpunkt (t_{B}) liegenden ersten Zeitpunkt (t₁) ansteigt, zu dem die Magnetkraft der Kraft der Feder oder Federn (42) entspricht oder näherungsweise entspricht, dass der elektrische Strom (I_{B}) bis zu einem nach dem ersten Zeitpunkt (t₁) liegenden zweiten Zeitpunkt (t₂) langsamer ansteigt als zwischen dem Bremsenbetätigungszeitpunkt (t_{B}) und dem ersten Zeitpunkt (t₁), und dass der elektrische Strom (I_{B}) nach dem zweiten Zeitpunkt (t₂) stärker ansteigt als zwischen dem ersten Zeitpunkt (t₁) und dem zweiten Zeitpunkt (t₂), wobei die Differenz aus dem zweiten Zeitpunkt (t₂) und dem Bremsenbetätigungszeitpunkt (t_{B}) die Betätigungszeit der Bremse (34) ergibt.

12. Verfahren nach einem der vorangehenden Ansprüche, **dadurch gekennzeichnet, dass** die Auswertung der Form der Strom-Zeit-Kurve das Erkennen von Bereichen unterschiedlicher Steigung und/oder Änderungsgeschwindigkeit der Strom-Zeit-Kurve umfasst.

13. Verfahren nach Anspruch 12, **dadurch gekennzeichnet, dass** der elektrische Strom (I_{B}) sich bis zu einem nach dem Bremsenbetätigungszeitpunkt (t_{B}) liegenden ersten Zeitpunkt (t₁) ändert, sich bis zu einem nach dem ersten Zeitpunkt (t₁) liegenden zweiten Zeitpunkt (t₂) langsamer ändert als zwischen dem Bremsenbetätigungszeitpunkt (t_{B}) und dem ersten Zeitpunkt (t₁) und sich nach dem zweiten Zeitpunkt (t₂) stärker ändert als zwischen dem ersten und dem zweiten Zeitpunkt, wobei der zeitliche Versatz (Δt_{V}) in Abhängigkeit von der Differenz aus dem zweiten Zeitpunkt (t₂) und dem Bremsenbetätigungszeitpunkt (t_{B}) neu bestimmt und/oder adaptiert wird.

14. Verfahren nach den Ansprüchen 10 und 13, **dadurch gekennzeichnet, dass** die Differenz aus dem zweiten Zeitpunkt (t₂) und dem Bremsenbetätigungszeitpunkt (t_{B}) die Betätigungszeit der Bremse (34) ergibt.

15. Verfahren nach einem der vorangehenden Ansprüche, **dadurch gekennzeichnet, dass** der Bremse (34) wenigstens zwei Betätigungszustände zugeordnet sind, wobei die Bremse (34) in einem ersten Betätigungszustand im Eingriff und in einem zweiten Betätigungszustand gelöst ist.

## Claims

1. Method for controlling a rotor blade adjustment device (14) of a wind or water turbine (1), wherein the rotor blade adjustment device (14) has a drive (20) connected to a rotor blade (8) exposed to a wind or water flow to rotate the rotor blade (8) around a rotor blade axis (15) relative to a rotor hub (7), on which the rotor blade (8) is mounted so as to be rotatable around the rotor blade axis (15) and an electromagnetic brake (34) connected to the rotor blade (8) to lock a rotation of the rotor blade (8) around the rotor blade axis (15), wherein the brake (34) is actuated to change its activation status at a brake activation time (t_{B}) and wherein the drive (20) is actuated to change its drive status at a drive activation time (t_{A}), which has a predetermined time offset (Δt_{V}) at the brake activation time (t_{B}), **characterised in that** an electric current (I_{B}) flowing through the brake (34) is measured, the shape of the resulting current/time curve is evaluated and the time offset (Δt_{V}) is re-determined and/or adapted depending on the result of this evaluation.

2. Method according to claim 1, **characterised in that** the time offset (Δt_{V}) is changed according to the evaluation of the shape of the current/time curve.

3. Method according to claim 1 or 2, **characterised in that** the electric current (I_{B}) flowing through the brake (34) is measured continuously or over a time interval (Δt₁), wherein the brake activation time (tA) is at the beginning or within the time interval (Δt₁) and the time of the change of the activation status (t₂) is at the end or within the time interval (Δt₁).

4. Method according to any one of the preceding claims, **characterised in that** the drive activation time (t_{A}) is after the brake activation time (t_{B}) by the time offset (Δt_{V}).

5. Method according to any one of the preceding claims, **characterised in that** the drive (20) is actuated at the drive activation time (t_{A}) to rotate the rotor blade (8) and the brake (34) is actuated at the brake activation time (t_{B}) to release the rotor blade (8).

6. Method according to any one of the preceding claims, **characterised in that** the brake (34) locks the rotor blade (8) at the brake activation time (t_{B}) and the drive (20) is idle at the drive activation time (t_{A}).

7. Method according to any one of the preceding claims, **characterised in that** the brake (34) is connected to an electric voltage source (48) at the brake activation time (t_{B}) which supplies the electric current (I_{B}).

8. Method according to claim 7, **characterised in that** the electric voltage (U₀) provided by the voltage source (48) is a direct voltage.

9. Method according to any one of the preceding claims, **characterised in that** the electromagnetic brake (34) has a carrier (37), at least one brake disc (38), at least one anchor disc (41) mounted on the carrier (37) so as to be displaceable relative to the brake disc (38), one or a plurality of springs (42) mounted on the carrier (37) and pressing the anchor disc (41) in the direction of the brake disc (38) and at least one electromagnet (43), which, in the energised status, moves the anchor disc (41) away from the brake disc (38) by magnetic force against the force of the spring or springs (42) or holds it at a distance thereto.

10. Method according to any one of the preceding claims, **characterised in that** an activation time (t₂-t₀) of the brake (34) lapsing from the brake activation time (t_{B}) to the change of the activation status is determined by evaluating the shape of the current/time curve and the predetermined time offset (Δt_{V}) is re-determined and/or adapted depending on this activation time (t₂-t₀).

11. Method according to claims 9 and 10, **characterised in that** the electric current (I_{B}) increases up to a first time (t₁) located after the brake activation time (t_{B}) at which the magnetic force corresponds or approximately corresponds to the force of the spring or springs (42), **in that** the electric current (I_{B}) increases more slowly up to a second time (t₂) located after the first time (t₁) than between the brake activation time (t_{B}) and the first time (t₁) and **in that** the electric current (I_{B}) increases more strongly after the second time (t₂) than between the first time (t₁) and the second time (t₂), wherein the difference from the second time (t₂) and the brake activation time (t_{B}) gives the activation time of the brake (34).

12. Method according to any one of the preceding claims, **characterised in that** the evaluation of the shape of the current/time curve comprises identifying ranges of difference pitch and/or change speed of the current/time curve.

13. Method according to claim 12, **characterised in that** the electric current (I_{B}) is changed up to a first time (t₁) located after the brake activation time (t_{B}), is changed more slowly up to a second time (t₂) located after the first time (t₁) than between the brake activation time (t_{B}) and the first time (t₁) and is changed more strongly after the second time (t₂) than between the first and the second time, wherein the time offset (Δt_{V}) is re-determined and/or adapted depending on the difference from the second time (t₂) and the brake activation time (t_{B}).

14. Method according to claims 10 and 13, **characterised in that** the difference from the second time (t₂) and the brake activation time (t_{B}) gives the activation time of the brake (34).

15. Method according to any one of the preceding claims, **characterised in that** at least two activation statuses are assigned to the brake (34), wherein the brake (34) is engaged in a first activation status and released in a second activation status.

## Revendications

1. Procédé de contrôle d'un dispositif de réglage de pale de rotor (14) d'une éolienne ou d'une centrale hydroélectrique (1), le dispositif de réglage de pale de rotor (14) comprenant un entraînement (20) relié avec une pale de rotor (8) exposée à un écoulement d'air ou à un écoulement d'eau pour la rotation de la pale de rotor (8) autour d'un axe de pale de rotor (15) par rapport à un moyeu de rotor (7), au niveau duquel la pale de rotor (8) est logé de manière rotative autour de l'axe de pale de rotor (15), et un frein électromagnétique (34), relié avec la pale de rotor (8), pour le blocage d'une rotation de la pale de rotor (8) autour de l'axe de pale de rotor (15), le frein (34) étant contrôlé, pour la modification de son état d'actionnement, à un moment d'actionnement du frein (t_{B}) et l'entraînement (20) étant contrôlé pour la modification de son état d'entraînement à un moment d'actionnement de l'entraînement (t_{A}), qui présente, par rapport au moment d'actionnement du frein (t_{B}), un décalage temporel (Δt_{V}), **caractérisé en ce qu'**un courant électrique (I_{B}) circulant à travers le frein (34) est mesuré, la forme de la courbe courant-temps ainsi obtenue est analysée et le décalage temporel (Δt_{V}) est à nouveau déterminé et/ou adapté en fonction du résultat de cette analyse.

2. Procédé selon la revendication 1, **caractérisé en ce que** le décalage temporel (Δt_{V}) est modifié après l'analyse de la forme de la courbe courant-temps.

3. Procédé selon la revendication 1 ou 2, **caractérisé en ce que** le courant électrique (I_{B}) circulant à travers le frein (34) est mesuré en continu ou sur un intervalle de temps (Δt₁), le moment d'actionnement du frein (t_{A}) se trouvant au début ou à l'intérieur de l'intervalle de temps (Δt₁) et le moment du changement d'état d'actionnement (t₂) se trouvant à la fin ou à l'intérieur de l'intervalle de temps (Δt₁).

4. Procédé selon l'une des revendications précédentes, **caractérisé en ce que** le moment d'actionnement de l'entraînement (t_{A}) se trouve après le moment d'actionnement du frein (t_{B}) avec le décalage temporel (Δt_{V}).

5. Procédé selon l'une des revendications précédentes, **caractérisé en ce que** l'entraînement (20) est contrôlé, au moment d'actionnement de l'entraînement (t_{A}) pour la rotation de la pale de rotor (8) et le frein (34) est contrôlé, au moment d'actionnement du frein (t_{B}), pour le déblocage de la pale de rotor (8).

6. Procédé selon l'une des revendications précédentes, **caractérisé en ce que** le frein (34) bloque la pale de rotor (8) au moment d'actionnement du frein (t_{B}) et l'entraînement (20) est immobilisé au moment d'actionnement de l'entraînement (t_{A}).

7. Procédé selon l'une des revendications précédentes, **caractérisé en ce que** le frein (34) est connecté, au moment d'actionnement du frein (t_{B}), à une source de tension électrique (48) qui fournit le courant électrique (I_{B}).

8. Procédé selon la revendication 7, **caractérisé en ce que** la tension électrique (U₀) mise à disposition par la source de tension (48) est une tension continue.

9. Procédé selon l'une des revendications précédentes, **caractérisé en ce que** le frein électromagnétique (34) comprend un support (37), au moins un disque de frein (38), au moins un disque d'induit (41) logé de manière coulissante sur le support (37) par rapport au disque de frein (38), un ou plusieurs ressorts (42), logés sur le support (37), et appuyant sur le disque d'induit (41) en direction du disque de frein (38), et au moins un électroaimant (43) qui, lorsqu'il est alimenté, écarte, à l'aide d'une force magnétique contre la force du ou des ressorts (42), le disque d'induit (41) du disque de frein (38) ou le maintient à distance par rapport à celui-ci.

10. Procédé selon l'une des revendications précédentes, **caractérisé en ce que** l'analyse de la forme de la courbe courant-temps détermine un temps d'actionnement (t₂-to) du frein (34) s'écoulant à partir du moment d'actionnement du frein (t_{B}) jusqu'à la modification de l'état d'actionnement et le décalage temporel (Δt_{V}) prédéterminé est à nouveau déterminé et/ou adapté en fonction de ce temps d'actionnement (t₂-t₀).

11. Procédé selon les revendications 9 et 10, **caractérisé en ce que** le courant électrique (I_{B}) augmente jusqu'à un premier moment (t₁) se trouvant après le moment d'actionnement du frein (t_{B}), auquel la force magnétique correspond à la force du ou des ressorts (42) ou correspond approximativement, **en ce que** le courant électrique (I_{B}) augmente, jusqu'à un deuxième moment (t₂) se trouvant après le premier moment (t₁), plus lentement qu'entre le moment d'actionnement du frein (t_{B}) et le premier moment (t₁) et **en ce que** le courant électrique (I_{B}) augmente, après le deuxième moment (t₂), plus fortement qu'entre le premier moment (t₁) et le deuxième moment (t₂), la différence entre le deuxième moment (t₂) et le moment d'actionnement du frein (t_{B}) donnant le temps d'actionnement du frein (34).

12. Procédé selon l'une des revendications précédentes, **caractérisé en ce que** l'analyse de la forme de la courbe courant-temps comprend la détection de zones de pentes et/ou de vitesses de variation différentes de la courbe courant-temps.

13. Procédé selon la revendication 12, **caractérisé en ce que** le courant électrique (I_{B}) varie jusqu'à un premier moment (t₁) se trouvant après le moment d'actionnement du frein (t_{B}), varie, après le deuxième moment (t₂) se trouvant après le premier moment (t₁), plus lentement qu'entre le moment d'actionnement du frein (t_{B}) et le premier moment (t₁) et varie, après le deuxième moment (t₂), plus fortement qu'entre les premier et deuxième moments, le décalage temporel (Δt_{V}) étant à nouveau déterminé et/ou adapté en fonction de la différence entre le deuxième moment (t₂) et le moment d'actionnement du frein (t_{B}).

14. Procédé selon les revendications 10 et 13, **caractérisé en ce que** la différence entre le deuxième moment (t₂) et le moment d'actionnement du frein (t_{B}) donne le temps d'actionnement du frein (34).

15. Procédé selon l'une des revendications précédentes, **caractérisé en ce qu'**au frein (34) correspondent au moins deux états d'actionnement, le frein (34) étant enclenché dans un premier état d'actionnement et débloqué dans un deuxième état d'actionnement.
